# EUROPEAN PATENT APPLICATION

(11) **EP 3 546 499 A1**
(43) Date of publication of application: **02.10.2019**
(21) Application number: 19165545.5
(22) Date of filing: 27.03.2019
(51) Int. Cl.: C08J 3/075, C08K 3/34, C08K 5/053, C08L 33/26, G09B 23/28, B29C 64/112, C08J 5/18

(54) **HYDROGEL STRUCTURE, METHOD OF MANUFACTURING HYDROGEL STRUCTURE, AND INTERNAL ORGAN MODEL**

(30) Priority: 30.03.2018 JP 2018066758
(71) Applicant: Ricoh Company, Ltd., Tokyo 143-8555 (JP)
(72) Inventor: SAITO, Takuya, Ohta-ku, Tokyo 143-8555 (JP); MATSUMURA, Takashi, Ohta-ku, Tokyo 143-8555 (JP); NIIMI, Tatsuya, Tokyo, 143-8555 (JP)
(74) Representative: White, Duncan Rohan

(57) **Abstract**

A hydrogel structure contains a hydrogel body containing water, a polymer, and a mineral, and a film on the surface of the hydrogel body, wherein the film has a peeling-off strength of 1.0 N/mm or more.

## Description

### BACKGROUND

### Technical Field

The present invention relates to a hydrogel structure, a method of manufacturing a hydrogel structure, and an internal organ model.

### Description of the Related Art

Hydrogel is appealing as a soft material.

Hydrogel is capable of taking in water in polymer networking formed in the gel and holding water accounting for 70 to 80 percent by mass of the total mass. This imparts hydrogel properties such as low friction, high water proportion, flexibility, which are not features of metal or resins.

High-strength gel represented by topological gel, tetrapeg gel, double network gel, nanocomposite (NC) gel, etc., has been developed, and the problem involved with conventional hydrogel of being weak and fragile to deformation is close to solution. In particular, NC gels containing minerals inside are expected to have wide applications such as medical applications and cosmetic applications as well as industrial applications because of high transparency of the obtained gel and flexibility with high elasticity.

On the other hand, since hydrogel incorporates a lot of water, the hydrogel is dried over time when it is left in the atmosphere so that the hydrogel changes its form and loses elasticity.

As a solution to this problem, a method has been proposed in JP-2008-156405-A in which a polymer gel is coated with a mixture of an acrylic resin composition, hexanediol acrylate, and an initiator, and is thereafter thermally cured to form a film. Also, a method has been proposed in JP-2015-138192-A which includes forming a moisture-retaining film by impregnating a hydrogel with a high-humidity polysaccharide, an oil, or a water-soluble organic medium having a high boiling point. Further, a method has been proposed in JP-2017-26791-A which includes forming a resin film of, for example, polyester, polyolefin, polyvinyl chloride, etc., on a hydrogel structure.

Further, an internal organ model having a film on the surface of a hydrogel has been proposed as an application example using a hydrogel structure in JP-2015-138192-A mentioned above and JP-2017-26791-A mentioned above.

### SUMMARY

According to embodiments of the present disclosure, an improved hydrogel structure is provided which includes a hydrogel body and a film on the hydrogel body, the film being capable of preventing the hydrogel structure from being dried, thereby keeping the form of the hydrogel structure during storage, the film not being sticky while keeping good operability, since the film has excellent adhesion property to the hydrogel body so as not to be peeled off from the hydrogel body.

According to embodiments of the present disclosure, provided is a hydrogel structure (200) which contains a hydrogel body (201) containing water, a polymer, and a mineral, and a film (202) on the surface of the hydrogel body (201), wherein the film (202) has a peeling-off strength of 1.0 N/mm or more.

As another aspect of embodiments of the present disclosure, provided is an improved method of manufacturing a hydrogel structure (200) which includes contacting a composition containing an isocyante group with the surface of a hydrogel body (201) of the hydrogel structure (200) to form a film (202) on the hydrogel body (201), wherein the hydrogel body (201) contains water, a polymer, and a mineral.

As another aspect of embodiments of the present disclosure, provided is an improved internal organ model (30) which includes a hydrogel body (38) containing water, a polymer, and a mineral, and a film (36) on the suface of the hydrogel body (38), wherein the film (36) has a structure of Si-O-CO-NH- on the side of the hydrogel body (38).

### BRIEF DESCRIPTION OF THE SEVERAL VIEWS OF THE DRAWINGS

Various other objects, features and attendant advantages of the present invention will be more fully appreciated as the same becomes better understood from the detailed description when considered in connection with the accompanying drawings in which like reference characters designate like corresponding parts throughout and wherein:
FIG. 1 is a schematic diagram illustrating an example of a water-swellable lamellar clay mineral as a mineral and an example of a state in which the water-swellable lamellar clay mineral is dispersed in water;
FIG. 2 is a schematic diagram illustrating an example of a mold used for molding the hydrogel structure according to an embodiment of the present invention;
FIG. 3 is a schematic diagram illustrating another example of a mold used for molding the hydrogel structure according to an embodiment of the present invention;
FIG. 4 is a schematic diagram illustrating an example of the hydrogel structure of the present disclosure taken out of a mold;
FIG. 5 is a schematic diagram illustrating another example of the hydrogel structure of the present disclosure;
FIG. 6 is a schematic diagram illustrating a 3D printer to fabricate a hydrogel structure;
FIG. 7 is a schematic diagram illustrating an example of the state in which a support material is peeled off from a hydrogel structure fabricated by a 3D printer;
FIG. 8 is a schematic diagram illustrating a 3D printer employing another method to fabricate a hydrogel structure;
FIG. 9 is a schematic diagram illustrating an example of an internal organ model having a film on the surface;
FIG. 10 is a schematic diagram illustrating an example of the hydrogel structure having a film on the surface;
FIG. 11 is a schematic diagram illustrating another example of the hydrogel structure having a film on the surface;
FIG. 12 is a schematic diagram illustrating a test method of pressing in an indenter; and
FIG. 13 is a schematic diagram illustrating a peeling-off test method.

The accompanying drawings are intended to depict example embodiments of the present invention and should not be interpreted to limit the scope thereof. The accompanying drawings are not to be considered as drawn to scale unless explicitly noted. Also, identical or similar reference numerals designate identical or similar components throughout the several views.

### DESCRIPTION OF THE EMBODIMENTS

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

As used herein, the singular forms "a", "an", and "the" are intended to include the plural forms as well, unless the context clearly indicates otherwise.

Moreover, image forming, recording, printing, modeling, etc. in the present disclosure represent the same meaning, unless otherwise specified.

Embodiments of the present invention are described in detail below with reference to accompanying drawing(s). In describing embodiments illustrated in the drawing(s), specific terminology is employed for the sake of clarity. However, the disclosure of this patent specification is not intended to be limited to the specific terminology so selected, and it is to be understood that each specific element includes all technical equivalents that have a similar function, operate in a similar manner, and achieve a similar result.

For the sake of simplicity, the same reference number will be given to identical constituent elements such as parts and materials having the same functions and redundant descriptions thereof omitted unless otherwise stated.

A method has been proposed in JP-2008-156405-A in which a polymer gel is coated with a mixture of an acrylic resin composition, hexanediol acrylate, and an initiator, and is thereafter thermally cured to form a film. Also, a method has been proposed in JP-2015-138192-A which includes forming a moisture-retaining film by impregnating a hydrogel with a high-humidity polysaccharide, an oil, or a water-soluble organic medium having a high boiling point. Further, a method has been proposed in JP-2017-26791-A which includes forming a resin film of, for example, polyester, polyolefin, polyvinyl chloride, etc., on a hydrogel structure.

Further, an internal organ model having a film on the surface of a hydrogel has been proposed as an application example using a hydrogel structure in JP-2015-138192-A mentioned above and JP-2017-26791-A mentioned above.

Since a hydrogel takes in a lot of water inside, the hydrogel is dried over time when it is left in the atmosphere so that the hydrogel changes its form and loses elasticity.

Therefore, a hydrogel structure is demanded which is capable of diminishing drying and maintaining the form during storage.

Since the hydrogel structures proposed in JP-2008-156405-A, JP-2015-138192-A, and JP-2017-26791-A mentioned above have a film on the surface, drying during storage can be reduced. However, it involves the following drawbacks.

Regarding the hydrogel structure described in JP-2008-156405-A mentioned above, the film and the hydrogel are not well glued to each other so that the film is peeled off when a strong external force is applied.

The surface of the hydrogel structure described in JP-2015-138192-A mentioned is viscous and sticky, which feels uncomfortable. In addition, for example, when trying to operate the hydrogel structure using an instrument, if the instrument touches the film, due to viscosity of the film, the components of the film adheres to the instrument. This makes the instrument sticky and degrades operability.

Regarding the hydrogel structure described in JP-2017-26791-A mentioned above, the film and the hydrogel are not well glued to each other so that the film is peeled off when a strong external force is applied like the hydrogel structure described in JP-2008-156405-A mentioned above.

Therefore, a hydrogel structure having a film on its surface is demanded which is prevented from being dried, thereby keeping the form during storage, free of being sticky, and has good operability while the film firmly glues to the hydrogel structure so as not to be peeled off from the hydrogel structure.

According to embodiments of the present disclosure, an improved hydrogel structure is provided which includes a hydrogel body and a film on the hydrogel body, the film being capable of preventing the hydrogel structure from being dried, thereby keeping the form of the hydrogel structure during storage, the film not being sticky while keeping good operability, since the film has excellent adhesion property to the hydrogel body so as not to be peeled off from the hydrogel body.

As a result of the investigation by the present inventors, the hydrogel structure having the following structure is provided.

### Hydrogel Object

The hydrogel structure of the present disclosure contains at least water, a polymer, and a mineral, and forms a film on the surface. The hydrogel structure of the present disclosure is separated into the body of the hydrogel structure containing water, a polymer, and a mineral and a film formed on the surface of the body.

The body of the hydrogel structure includes a hydrogel containing water, a polymer, and a mineral, and may further optionally contain an organic solvent and other components.

The hydrogel preferably encloses water in a three-dimensional network structure of a complex combination of a mineral dispersed in a solvent and a polymer polymerized from a polymerizable monomer.

In the present disclosure, the film has features of at least one of the following 1 to 3.
1. The peeling-off strength of the film is 1.0 N/mm or more as measured by peeling-off strength by a peeling-off test. The specific measuring method of the peeling-off test will be described later.
2. The hydrogel structure side of the film has a structure of Si-O-CO-NH-.
3. The hydrogel structure side of the film contains a composition containing an isocyanate group.

The hydrogel structure having at least one of 1 to 3 mentioned above is capable of diminishing drying during storage, thereby keeping the shape. Furthermore, the surface is not sticky so that the hydrogel structure has good operability. Also, the film is firmly glued to the hydrogel structure.

In the hydrogel structure of the present disclosure, the film disposed on the surface of the body of the hydrogel structure may be formed of a homogeneous single layer or have portions having different compositions in a film layer.

In the case where the film has portions having different compositions, the compositions of the film may be different between the side of the hydrogel structure and the opposite side thereto. More specifically, the film has a portion serving as an undercoat layer positioned on the side of the hydrogel structure and a portion located on the opposite side to the hydrogel structure side, which serves as an overcoat layer having a different composition from that of the undercoat layer. The undercoat layer is also referred to as the undercoat portion and the overcoat layer is also referred to as the overcoat portion.

Having different compositions means that the compositions do not coincide with each other, such that the types of substances constituting the film are different or when the substance is the same but the amount ratio thereof is different.

In the case where the film includes an undercoat portion and an overcoat portion, the film of the undercoat portion has the following features of 2 and 3 mentioned above. On the other hand, the film of the overcoat portion has a composition different from that of the film of the undercoat portion. For example, the overcoat portion is preferably made of a polymer non-reactive to the body of hydrogel structure.

In order to form a film having an undercoat portion and an overcoat portion having different compositions from each other, for example, a composition containing an isocyanate group is brought into contact with the surface of the hydrogel structure. Next, the polymer non-reactive to the hydrogel structure is brought into contact with the composition. The film forming method will be described in detail later.

What is required in the present disclosure is that the film has different compositions on the side of the hydrogel structure and on the opposite side thereto. It is not necessary to identify in the film what part is the undercoat portion or what part is the overcoat portion. For example, the undercoat portion and the overcoat portion are integrally formed, and the boundary portion may be not clear in some cases. Therefore, if the compositions are recognized to be different on the side of the hydrogel structure and the opposite side as a whole layer of the film, a clear distinction is not necessary between the undercoat portion and the overcoat portion.

Due to the inclusion of the undercoat portion and the overcoat portion in the film, various features can be imparted to the overcoat portion. For example, surface properties and physical properties can be modified and various properties such as anti-drying property, anti-fouling property, antiseptic property, anti-fungal property, form retaining property, heat resistance/low temperature properties, tackiness enhancement, slippage prevention (slippage change), and insulating properties can be imparted.

The configuration of the hydrogel structure of the present disclosure will be described.

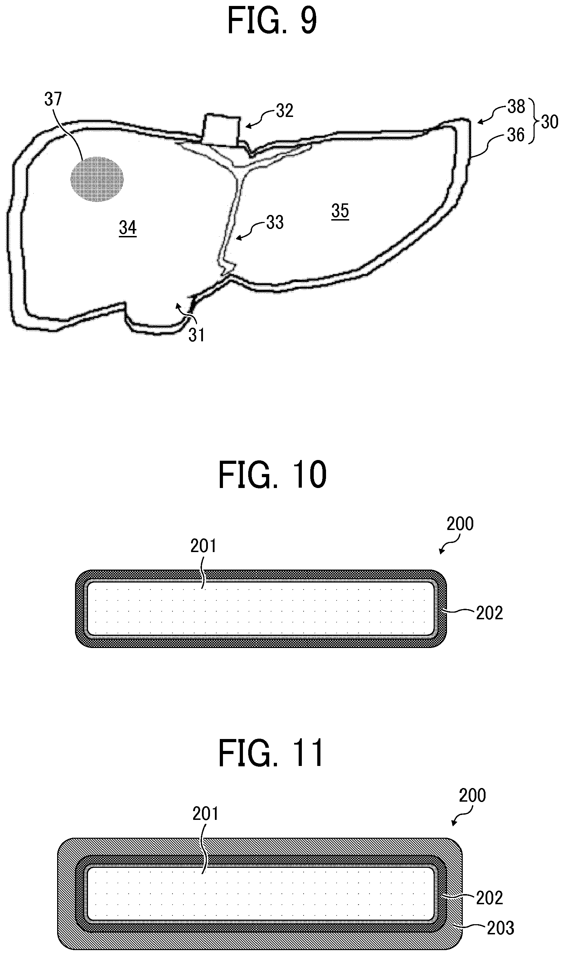

FIG. 10 is a schematic diagram illustrating an example of the hydrogel structure having a film on the surface.

A film 202 is formed on the outer periphery of a hydrogel body 201.

Next, a hydrogel structure having a film including an undercoat portion and an overcoat portion is described.

FIG. 11 is a schematic diagram illustrating another example of the hydrogel structure having a film on the surface.

On the outer periphery of the hydrogel body 201, a film 202 (film of the undercoat portion disposed on the side in contact with the hydrogel) and a film 203 of the overcoat portion having a different film from the film 202 are disposed to integrally form a film.

The hydrogel structure of the present disclosure is described in detail separately for the body of the hydrogel structure and the film of the hydrogel structure.

### A. Hydrogel Structure (Body)

The hydrogel body (hereinafter also simply referred to as body) of the hydrogel structure includes a hydrogel containing water, a polymer, and a mineral, and may further optionally contain an organic solvent and other components.

The hydrogel preferably encloses water in a three-dimensional network structure of a complex combination of a mineral dispersed in water and a polymer polymerized from a polymerizable monomer.

### Polymer

As the polymer, polymers having, for example, an amide group, an amino group, a hydroxyl group, a tetramethyl ammonium group, a silanol group, an epoxy group, etc., are suitable and allowed to be water-soluble.

Water-solubility of the polymer in the present disclosure means, for example, when 1 g of a polymer is mixed with and stirred in 100 g of water at 30 degrees C, 90 percent by mass or more of the polymer is dissolved in water.

The polymer can be a homopolymer (monopolymer) and heteropolymers (copolymers). These can be modified and known functional groups can be introduced into these. Forms of salts are also allowed.

Polymers are obtained by polymerizing polymerizable monomers. The method of manufacturing the hydrogel structure for manufacturing the body by polymerization of the polymerizable monomer will be described in detail in Method of Manufacturing Body of Hydrogel Structure. The polymerizable monomers that can be used in the present disclosure are also exemplified below in Method of Manufacturing Hydrogel Structure (Body).

### Water

As the water, pure water and hyper pure water such as deionized water, ultrafiltered water, reverse osmosis water, and distilled water can be used.

It is suitable to dissolve or disperse other components such as organic solvents in the water to impart moisturizing property, antibiotic property, or electroconductive property and adjust hardness.

### Mineral

The mineral has no particular limit and can be suitably selected to suit to a particular application. For example, water swellable lamellar clay minerals are suitable.

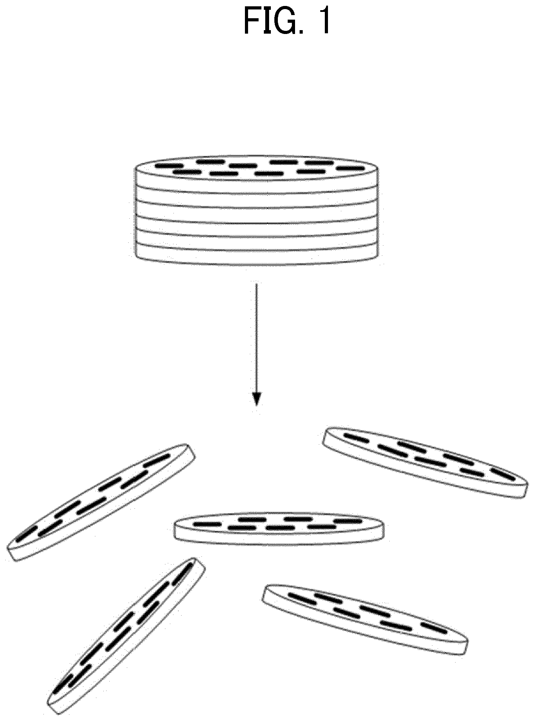

For example, FIG. 1 is a schematic diagram illustrating an example of a water-swellable lamellar clay mineral as a mineral and an example of a state in which a water-swellable lamellar clay mineral is dispersed in water.

As illustrated in the upper diagram in FIG. 1, the water-swellable lamellar clay mineral is present in a form of a single layer and assumes a state in which two-dimensional disk-like crystals having unit cells in the crystal are stacked. Further, when the water-swellable lamellar clay mineral in the upper diagram of FIG. 1 is dispersed in water, each single layer is separated into a plurality of two-dimensional disc-like crystals as illustrated in the lower diagram in FIG. 1.

Examples of such clay minerals are water swellable smectite and water swellable mica.

Specific examples include, but are not limited to, water swellable hectorite containing sodium as an interlayer ion, water swellable montmorillonite, water swellable saponite, and water swellable synthesized mica. These can be used alone or in combination. Of these, water swellable hectorite is preferable to obtain a hydrogel structure or an organ model having high elasticity.

Water swellable hectorite can be appropriately synthesized or is available on the market.

Specific examples of the product available on the market include, but are not limited to, synthesized hectorite (laponite XLG, manufactured by RockWood), SWN (manufactured by Coop Chemical Ltd.), and fluorinated hectorite SWF (manufactured Coop Chemical Ltd.). Of these, synthetic hectorite is preferable in view of the elastic modulus of the hydrogel structure or an organ model described later.

"Water swellable" means that water molecules are inserted between each layer of the lamellar clay mineral and each layer is dispersed in water as illustrated in FIG. 1.

The proportion of the mineral to the total amount of the hydrogel structure (body) is preferably from 1 to 40 percent by mass and more preferably from 1 to 25 percent by mass in terms of elastic modulus and hardness of the hydrogel.

### Organic Solvent

Inclusion of the organic solvent is suitable to enhance moisture retention of the hydrogel.

Specific examples of the organic solvent include, but are not limited to, alkyl alcohols having one to four carbon atoms such as methylalcohol, ethyl alcohol, n-propyl alcohol, isopropyl alcohol, n-butyl alcohol, sec-butyl alcohol, and tert-butyl alcohol, amides such as dimethylfornamide and dimethylacetoamide, ketones or ketone alcohols such as acetone, methylethylketone, and diacetone alcohol, ethers such as tetrahydrofuran and dioxane, multi-valent polyols such as ethylene glycol, propylene glycol, 1,2-propane diol, 1,2-butane diol, 1,3-butane diol, 1,4-butane diol, diethylene glycol, triethylene glycol, 1,2,6-hexane triol, thioglycol, hexylene glycol, and glycerin, polyalkylene glycols such as polyethylene glycol and polypropylene glycol, lower alcohol ethers of polyols such as ethylene glycol monomethyl (or ethyl) ether, diethylene glycol methyl (or ethyl) ether, and triethylene glycol monomethyl (or ethyl) ether, alkanol amines such as monoethanol amine, diethanol amine, and triethanol amine, N-methyl-2-pyrolidone, 2-pyrolidone, and 1,3-dimethyl-2-imidazoline. These can be used alone or in combination. Of these, in terms of moisture retention, polyols are preferable and glycerin and propylene glycol are more preferable.

The proportion of the organic solvent in the total amount of the hydrogel is preferably from 10 to 50 percent by mass. When the proportion of the organic solvent is 10 percent by mass or greater, the effect of anti-drying can be sufficiently demonstrated. When the proportion of the organic solvent is 50 percent by mass or less, the lamellar clay mineral is uniformly dispersed.

### Other Components

There is no specific limitation to the other components and it can be suitably selected to suit to a particular application. For example, such other optional components include a phosphonic acid compound such as 1-hydroxyethane-1,1-diphosphonic acid, stabilizers, surface treatment chemicals, polymerization initiators, colorants, viscosity modifiers, adhesion imparting agents, antioxidants, anti-aging agents, cross-linking promoters, ultraviolet absorbents, plasticizers, preservatives, and dispersants.

### Method of Manufacturing Hydrogel Structure (Body)

According to the method of manufacturing the hydrogel structure (body), a hydrogel structure is manufactured using a liquid material (hydrogel precursor) for forming a hydrogel containing water, a mineral, and a polymerizable monomer.

### Liquid Material for Forming Hydrogel

The liquid material for forming the hydrogel contains water, a mineral, and a polymerizable monomer. The liquid material preferably contains an organic solvent and furthermore optionally other components.

Water, the mineral, the organic solvents, and the other component are as described in A. Hydrogel Structure (Body).

### Polymerizable Monomer

The polymerizable monomer is a compound having at least one unsaturated carbon-carbon bond and includes, for example, a mono-functional monomer and a multi-functional monomer. Furthermore, the multi-functional monomer includes a bi-functional monomer, a tri-functional monomer, or a tetra- or higher functional monomer.

The mono-functional monomer is a compound having a single unsaturated carbon-carbon bond. Examples are acrylamides, N-substituted acrylamide derivatives, N,N-disubstituted acrylamide derivatives, N-substituted methacrylamide derivatives, N,N-disubstituted methacrylamide derivatives, and other mono-functional monomers. These can be used alone or in combination.

The N-substituted acrylamide derivatives, N,N-di-substituted acrylamide derivatives, N-substituted methacrylamide derivatives, and N,N-di-substituted methacrylamide derivatives include, for example, N,N-dimethyl acryl amide (DMAA) and N-isopropyl acryl amide.

Specific examples of the other mono-functional monomers include, but are not limited to, 2-etylhexyl(meth)acrylate (EHA), 2-hydroxyethyl(meth)acrylate (HEA), 2-hydroxypropyl(meth)acrylate (HPA), acryloyl morpholine (ACMO), caprolactone-modified tetrahydrofurfuryl(meta)acrylate, isobonyl(meth)acrylate, 3-methoxybutyl(meth)acrylate, tetrahydro furfuryl(meth)acrylate, lauryl(meth)acrylate, 2-phenoxyethyl(meth)acrylate, isodecyl(meth)acrylate, isooctyl(meth)acrylate, tridecyl(meth)acrylate, caprolactone(meth)acrylate, ethoxyfied nonylphenol(meth)acrylate, and urethane(meth)acrylate. These can be used alone or in combination.

Water-soluble organic polymers having an amide group, an amino group, a hydroxyl group, a tetramethyl ammonium group, a silanol group, an epoxy group, etc. are obtained by polymerizing mono-functional monomers.

Water soluble organic polymers having an amide group, an amino group, a hydroxyl group, a tetramethyl ammonium group, a silanol group, an epoxy group, etc. are advantageous to maintain the strength of the hydrogel structure or an internal organ model, which is described later.

The proportion of the mono-functional monomer is not particularly limited but can be suitably selected to suit to a particular application. It is preferably from 1 to 10 percent by mass and more preferably from 1 to 5 percent by mass to the total amount of the liquid material for forming the hydrogel structure. When the amount of the mono-functional monomer is in the range of from 1 to 10 percent by mass, dispersion stability of a lamellar clay mineral in the liquid material for forming a hydrogel is maintained and stretchability of the hydrogel structure is enhanced. Stretchability means that when a hydrogel modeling object is stretched, the hydrogel modeling object is not fractured (broken) but extended.

Specific examples of the bi-functional monomer include, but are not limited to, tripropylene glycol di(meth)acrylate, triethylene glycol di(meth)acrylate, tetraethylene glycol di(meth)acrylate, polypropylene glycol di(meth)acrylate, neopentyl glycol hydroxy pivalic acid ester di(meth)acrylate (MANDA), hydroxypivalic acid neopentyl glycol ester di(meth)acrylate (HPNDA), 1,3-butane diol di(meth)acrylate (BGDA), 1,4-butane diol di(meth)acrylate (BUDA), 1,6-hexane diol di(meth)acrylate (HDDA), 1,9-nonane diol(meth)acrylate, diethylene glycol di(meth)acrylate (DEGDA), neopentyl glycol di(meth)acrylate (NPGDA), tripropylene glycol di(meth)acrylate (TPGDA), caprolactone-modified hydroxy pivalic acid neopentyl glycol ester di(meth)acrylate, propoxinated neopentyl glycol di(meth)acrylate, ethoxy-modified bisphenol A di(meth)acrylate, polyethylene glycol 200 di(meth)acrylate, polyethylene glycol 400 di(meth)acrylate, and methylenebis acrylamide. These can be used alone or in combination.

Specific examples of the tri-functional monomers include, but are not limited to, trimethylol propane tri(meth)acrylate (TMPTA), pentaerythritol tri(meth)acrylate (PETA), tirallyl isocyanate, tris(2-hydroxyethyl)isocyanulate tri(meth)acrylate, ethoxyfied trimethylol propane tri(meth)acrylate, propoxyfied trimethylol propane tri(meth)acrylate, and propoxyfied glyceryl tri(meth)acrylate. These can be used alone or in combination.

Specific examples of the tetra- or higher functional monomers include, but are not limited to, pentaerythritol tetra(meth)acrylate, ditrimethylol propanetetra(meth)acrylate, dipentaerythritol hydroxypenta(meth)acrylate, ethoxyfied pentaerythritol tetra (meth)acrylate, penta(meth)acrylate ester, and dipentaerythritol hexa(meth)acrylate (DPHA). These can be used alone or in combination.

The proportion of the multi-functional monomer is preferably from 0.001 to 1 percent by mass and more preferably from 0.01 to 0.5 percent by mass to the total content of the liquid material for forming a hydrogel. When the proportion is from 0.001 to 1.000 percent by mass, modulus of elasticity and hardness of an obtained hydrogel structure can be controlled within suitable ranges.

It is preferable to cure the liquid material for forming a hydrogel using a polymerization initiator. The polymerization initiator is added to the liquid material for forming a hydrogel.

### Polymerization Initiator

Examples of the polymerization initiator are thermal polymerization initiators and photopolymerization initiators.

The thermal polymerization initiator has no particular limitation and can be suitably selected to suit to a particular application. Examples thereof are azo-based initiators, peroxide initiators, persulfate initiators, and redox (oxidation-reduction) initiators.

Specific example of the azo-based initiator include, but are not limited to, VA-044, VA-46B, VA-50, VA-057, VA-061, VA-067, VA-086, 2,2'-azobis(4-methoxy-2,4-dimethylvaleronitrile) (VAZO® 33), 2,2'-azobis(2-amidinopropane)dihydrochloride (VAZO® 50), 2,2'-azobis(2,4-dimetaylvaleronitrile) (VAZO® 52), 2,2'-azobis(isobutylonitrile) (VAZO® 64), 2,2'-azobis-2-methylbutylonitrile) (VAZO® 67), and 1,1-azobis(1-cyclohexane carbonitrile) (VAZO® 88) (all available from E.I. du Pont de Nemours and Company), 2,2'-azobis(2-cyclopropylpropionitrile), and 2,2'-azo-bis(methylisobutylate) (V-601) (all available from Wako Pure Chemical Corporation).

Specific examples of the peroxide initiator include, but are not limited to, benzoyl peroxide, acetyl peroxide, lauroyl peroxide, decanoyl peroxide, dicetyl peroxy dicarbonate, di(4-t-butylcyclohexyl)peroxy dicarbonate (Perkadox 16S) (available from Akzo Nobel N.V.), di(2-ethylhexyl)peroxy dicarbonate, t-butyl peroxypivalate (Lupersol 11) (all available from ElfAtochem S.A), t-butylperoxy-2-ethyl hexanoate (Trigonox 21-C50) (available from Akzo Nobel N.V.), and dicumyl peroxide.

Specific examples of the persulfate initiator include, but are not limited to, potassium persulfate, sodium persulfate, ammonium persulfate, and peroxo sodium disulfate.

Specific examples of redox (oxidation-reduction) initiator include, but are not limited to, a combination of the persulfate initiator and a reducing agent such as sodium metabisulfite and sodium bisulfite, a system based on the organic peroxide and tertiary amine (such as a system based on benzoyl peroxide and dimethylaniline), and a system based on organic hydroperoxide and transition metal (such as a system based on cumenhydroperoxide and cobalt naftate).

As the photopolymerization initiator, any material can be used which produces a radical upon irradiation of light (ultraviolet rays in a wavelength range of from 220 to 400 nm).

Specific examples of the photopolymerization initiator include, but are not limited to, acetophenone, 2,2-diethoxyacetophenone, p-dimethylaminoacetophenone, benzophenone, 2-chlorobenzophenone, p,p'-dichlorobenzophenone, p,p-bisdiethylamonobenzophenoen, Michler's Ketone, benzyl, benzoin, benzoin methylether, benzoin ethylether, benzoin isopropylether, benzoin-n-propylether, benzoin isobutylether, benzoin-n-butylether, benzylmethyl ketal, thioxanthone, 2-chlorothioxanthone, 2-hydroxy-2-methyl-1-phenyl-1-one, 1-(4-isopropylphenyl)-2-hydroxy-2-methylpropane-1-one, methylbenzoyl formate, 1-hydroxy cyclohexyl phenylketone, azobisisobutylo nitrile, benzoylperoxide, and di-tert-butylperoxide. These can be used alone or in combination.

Incidentally, tetramethylethylenediamine is used as an initiator of polymerization/gelation reaction to turn acrylamide into a polyacrylamide gel.

The method of manufacturing the hydrogel structure (body) of the present disclosure is roughly classified into a method using a mold and a direct manufacturing method using a three-dimensional printer.

These two methods will be described below.

### Method of Forming Hydrogel Structure (Body) Using Mold

In the method of forming using a mold, a liquid material for forming a hydrogel is poured into a mold and cured to form a hydrogel structure (body).

To manufacture a hydrogel structure (body) having a desired form, a mold having the desired form is prepared.

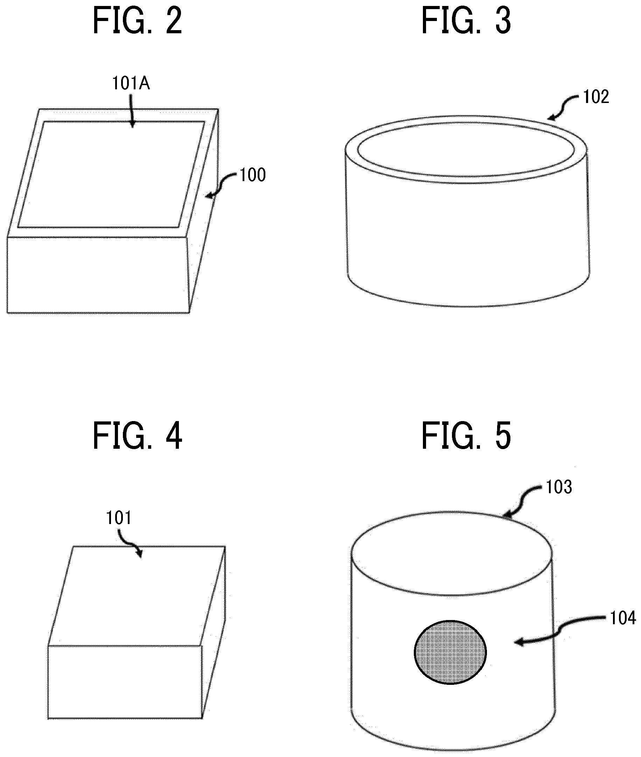

For example, for a cuboid 101A as illustrated in FIG. 2 or a cylinder 102 as illustrated in FIG. 3, a corresponding mold is prepared and the liquid material for forming a hydrogel is infused into the mold. To harden the liquid material using a thermal polymerization initiator, the reaction temperature is controlled depending on the kind of the initiator.

The liquid material for forming a hydrogel is poured into the mold, and the mold is sealed to block the hydrogel from air (oxygen) to allow polymerization reaction at room temperature or a predetermined temperature. After completion of the polymerization, a hydrogel body 101 is taken out of the mold (see FIG. 4).

In addition, to form parts having different compositions inside, a fabricated part 104 is separately set in a mold as illustrated in FIG. 3. Thereafter, a liquid material for forming a hydrogel is poured and cured to form a hydrogel body 103 having different parts in the inside as illustrated in FIG. 5.

To cure the liquid material for forming a hydrogel using a photopolymerization initiator, a curing device is used to irradiate the liquid material with energy rays such as ultraviolet rays. Therefore, the mold to be used is made of a material transparent to energy rays. The liquid material is poured into such a mold, which is thereafter sealed to block from air (oxygen). Subsequently, the mold is irradiated with energy rays from outside. After completing the polymerization in this manner, it is taken out from the mold to obtain a hydrogel structure.

Unlike the hydrogel structures having relatively simple forms as illustrated in FIGS. 4 and 5, for example, to form a hydrogel structure having an outlook mimicking the form of an internal organ, it is preferable to manufacture a mold using a 3D printer.

The 3D printer is not particularly limited. It is preferable to use a material and employ a method free of leakage of a liquid material for forming a hydrogel since a liquid material for forming a hydrogel is infused and cured. 3D printers employing an inkjet (material jet) method, a stereolithography method, a laser sintering method, etc., are suitably used.

For example, to prepare a mold conforming to the form of an internal organ, the computed tomography (CT) data is acquired and converted into three-dimensional (3D) data so that a male and female mold can be produced based on the CT data. Based on this 3D data, a mold for preparing a hydrogel structure is prepared by a 3D printer.

When a liquid material for forming a hydrogel is poured into a mold prepared based on desired form data by a 3D printer and cured, hydrogel structure having a desired form is obtained.

### Method of Directly Forming Hydrogel Structure (Body) Using 3D Printer

A hydrogel structure (body) is directly fabricated by a 3D printer using a liquid material for forming a hydrogel.

It is preferable that the 3D printer employ an inkjet method or stereolithography. By these methods, it is possible to control a composition distribution and a form, thereby forming a hydrogel having a desired form and properties.

For the 3D printer, it is preferable to employ a method capable of printing with a liquid material for forming a hydrogel. An inkjet (material jet) method or a method of discharging an ink made of a liquid material for forming a hydrogel by a dispenser method and curing the material with UV light is effectively used. In these methods, for example, since a plurality of materials for forming a hydrogel structure or an internal organ model can be used, it is possible to prepare a hydrogel structure having a composition distribution instead of a homogeneous hydrogel structure. In particular, it is possible to have a composition distribution that can control the propagation speed of ultrasonic waves. This is an effective technique to reproduce a part which is not a normal cell.

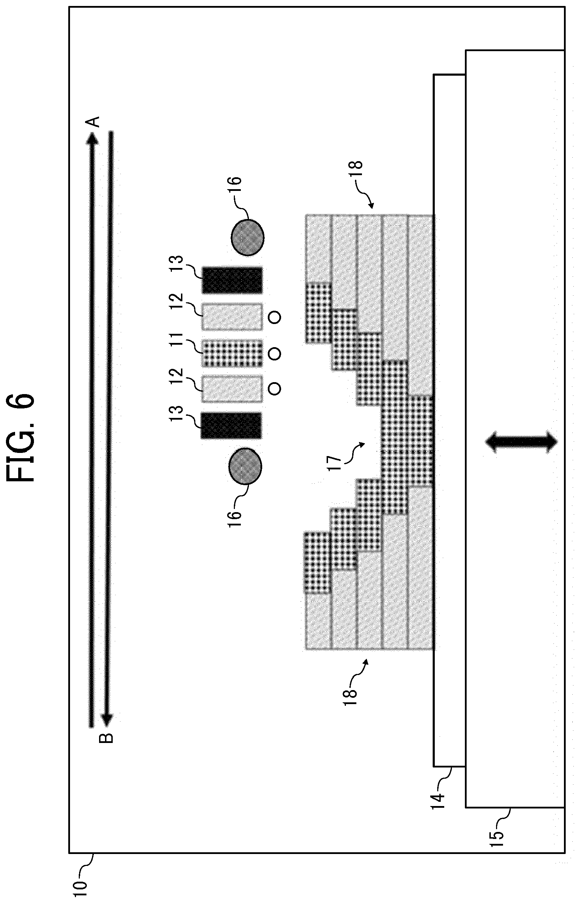

For example, FIG. 6 is a diagram illustrating a 3D printer 10 employing an inkjet (IJ) method. A discharging head unit 11 for a liquid material for forming a fabrication object discharges a liquid material for forming a hydrogel and discharging head units 12 for forming a support discharge a liquid material for forming a support. The liquid material for forming a hydrogel and discharging head units 12 for forming a support are laminated while being cured by ultraviolet irradiators 13 disposed adjacent to the discharging head units 12. Furthermore, the 3D printer 10 includes a support substrate 14 for a fabrication object and a smoothing member 16.

To keep the gap between the head unit 11, the head units 12, and the ultraviolet irradiators 13 and between a fabrication object (hydrogel structure) 17 and a support 18, a stage 15 is lowered in accordance with the number of the lamination operation.

In the 3D printer 10, the ultraviolet irradiators 13 are used in both directions indicated by arrows A and B. Due to the heat generated upon application of ultraviolet rays, the surface of the liquid material for forming a support is smoothed, thereby improving the dimension stability of a hydrogel structure.

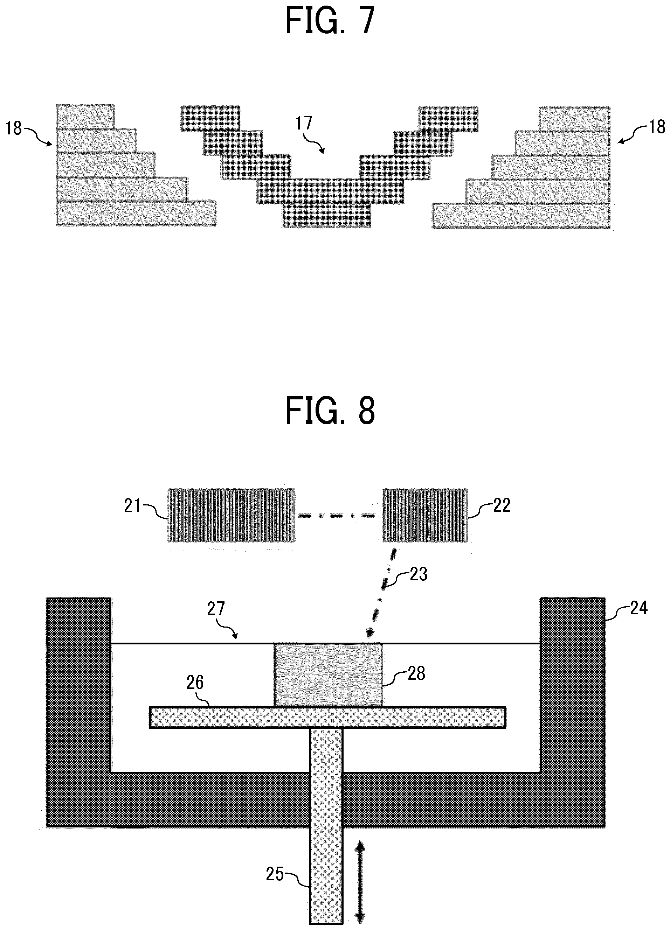

After the fabrication is completed, as illustrated in FIG. 7, the hydrogel structure 17 and the support 18 are pulled in the horizontal direction and peeled off from each other in such a manner that the support 18 is peeled off as a whole, that is, the hydrogel structure 17 can be easily obtained.

In addition, the 3D printer employing stereo lithography as illustrated in FIG. 8 stores a liquid material for forming a hydrogel in a liquid pool 24, irradiates a surface 27 of the liquid pool 24 with ultraviolet laser beams 23 emitted from a laser light source 21 via a laser scanner 22. As a result, a cured product is manufactured on a fabrication stage 26. The modeling stage 26 is lowered by the operation of a piston 25, which is repeated in order to obtain a fabrication object (hydrogel structure) 28.

### B. Film

Next, the film disposed on the surface of the body of the hydrogel structure will be described.

As described above, the hydrogel structure of the present disclosure has a film on the surface of the body of the hydrogel structure.

The film may be composed of a single homogeneous film layer or have parts composed of different compositions in the film layer.

In the case where the film has portions having different compositions, the compositions of the film may be different between the side of the hydrogel structure and the opposite side thereto. More specifically, the film has an undercoat portion positioned on the side of the hydrogel structure and an overcoat portion positioned on the opposite side to the hydrogel structure side, which has a different composition from that of the undercoat portion.

When the film is consisted of a single film layer, the film has the features of 2 and 3 mentioned above (FIG. 10).

Also, when the film has different compositions between the hydrogel structure side and the opposite side to the hydrogel structure side, the film of the undercoat portion demonstrates the features of 2 and 3 mentioned above. On the overcoat portion disposed on the surface on the opposite side to the hydrogel structure side, a film having a different composition from that of the undercoat portion is disposed (FIG. 11).

Hereinafter, the film is described separately about the first embodiment (in which the film is composed of a single film layer) and the second embodiment (in which the film has the undercoat portion and the overcoat portion).

### First Embodiment of Film

As described above, a film is formed on the surface of the hydrogel structure (body). This film is, for example, formed by bringing a composition containing an isocyanate group into contact with the surface of a hydrogel structure. The method of forming the film will be described in detail in Method of Forming Film of First Embodiment.

Due to the treatment of a hydrogel structure by the contact of the composition containing an isocyanate group, the functional group present on the surface of the hydrogel structure (body) reacts with the isocyanate group to impart desired properties such as hydrophobicity to the surface of the hydrogel structure.

That is, due to the contact of the composition having an isocyanate group with the surface of the hydrogel structure, silanol group reacts with the isocyanate group to form a film having a bonding group of Si-O-CO-NH-. This makes it possible to form a film firmly glued to the body of the hydrogel structure on the surface thereof.

### Composition Having Isocyanate Group

Specific examples of the composition having an isocyanate group for use in forming a film include, but are not limited to, the following. However, the composition is not limited to the following examples as long as it has an isocyanate group in the structure of the composition:
Monoisocyanate such as methyl isocyanate, ethyl isocyanate, propyl isocyanate, isopropyl isocyanate, butyl isocyanate, tert-butyl isocyanate, hexyl isocyanate, heptyl isocyanate, octyl isocyanate, pentyl isocyanate, decyl isocyanate, dodecyl isocyanate, octadecyl isocyanate, phenyl isocyanate, 4-(trifluoromethyl)phenyl isocyanate, methacryloyloxyethyl isocyanate, chlorosulfonyl isocyanate, p-toluenesulfonyl isocyanate, (R)-(+)-α-methylbenzyl isocyanate, 2-acryloyloxyethyl isocyanate, etc.; diisocyanate such as TDI(2,4-tolylene diisocyanate), 2,6-TDI(2,6-tolylene diisocyanate), MDI(4,4'-diphenylmethane diisocyanate), HDI(hexamethylene diisocyanate), IPDI(isophorone diisocyanate), H12-MDI(methylenebis(cyclohexane-4,1-diyl)diisocyanate, TM-mXDI(m-phenylenebis(1 -methylethane-1,1- diyl)diisocyanate), TM-pXDI(hexamethylene diisocyanate), mXDI(m-xylylene diyldiisocyanate), 1,5-NDI(naphthalene-1,5-diyl diisocyanate), TM-HDI(1,6-diisocyanato-2,2,4-trimethylhexane), TODI(3,3' - dimethylbiphenyl-4,4-diisocyanate), mPDI(1,3-phenylene diisocyanate), pPDI(1,4-phenylene diisocyanate), 1,3-CHDI(cyclohexane-1,3-diyl diisocyanate), 1,4-CHDI(cyclohexane-1,4-diyldiisocyanate), DDI(dimer acid diisocyanate), H6XDI(cyclohexane-1,3-diylbis(methyl isocyanate), 2,5-TDI(2-methyl-1,4-phenylene diisocyanate), 2, 4'-ODI(4-[(2-isocyanatophenyl)oxy]phenylisocyanate, 4,4'-ODI(4-[(4-isocyanatophenyl)oxy]phenylisocyanate, 1,4-NDI(naphthalene-1,4-diyl diisocyanate), 2,6-NDI(naphthalene-2,6-diyl diisocyanate), 2,7-NDI (naphthalene-2,7-diyl diisocyanate), M-CHDI(1-methylcyclohexane-2,4-diyl diisocyanate), DMO-BDI(2,2-dimethoxybiphenyl-4,4'-diyl diisocyanate), MC-HDI(2,6-diisocyanato methylhexanoate), 3,5-TDI(5-methyl-1,3-phenylene diisocyanate), 2,2'-MDI(methylenebis(2,1-phenylene)diisocyanate), 2,4'-MDI(4-[2-isocyanatophenyl)methyl]phenylisocyanate, DM-Si-Di(dimethyldiisocyanatosilane), TiP-mPDI(2,4,6-triisopropylbenzene-1,3-diyl diisocyanate), DM-C5-DI(2,2-dimethylpentane-1,5-diyl diisocyanate), 2,4'-SDI(4-[(2-isocyanatophenyl)thio]phenyl isocyanate), C11-DI(undecamethylene diisocyanate), DM-MDI(methylenebis(2-methyl-4,1-phenylene)diisocyanate), Adi-DAI(adipoyl isocyanate), 4,4'-EDI(4,4-ethylenebis(1-isocyanatobenzene), F6-BisDI(1-(trifluoromethyl)-2,2,2-trifluoroethylidenebis(4,1-phenylene) diisocyanate), C4-DI(tetramethylene diisocyanate), BDI(1,4-phenylenebis(ethylene)diisocyanate), PhEDI(1,4-phenylenebis(ethylene)diisocyanate), M-C2DI(1-methylethylene diisocyanate), C1-DI(methylene diisocyanate), 3,3'-SODI(sulfonylbis(3,1-phenylene)diisocyanate, C2-DI(ethylene diisocyanate), C3-DI(trimethylene diisocyanate), C5-DI(pentamethylene diisocyanate), C7-DI(heptane-1,7-diyl diisocyanate), C9-DI(nonamethylene diisocyanate), C10-DI(decamethylene diisocyanate), C13-DI(tridecamethylene diisocyanate), C14-DI(tetradecamethylene diisocyanate), C15-DI(pentadecamethylene diisocyanate), C16-DI(hexadecamethylene diisocyanate), C4en-DI(2-butene diisocyanate), C4dien-DI(1,3-butadiene-1,4-diyl diisocyanate), C4yn-DI(2-butynylenediisocyanate), F6C3-DI(hexafluoropropane-1,3-diyl diisocyanate), F8C4-DI(octafluorobutane-1,4-diyl diisocyanate), dimethyl diisocyanate silane, and diethyl diisocyanate silane; and tri-or higher functional isocyanate such as 1,3,6-hexamethylene triisocyanate, 1,8-diisocyanate-4-isocyanatomethyloctane, 2-isocyanatoethyl (2,6-diisocyanate)hexanoate, 1-methylbenzene-2,4,6-triisocyanate, diphenylmethane-2,4,4'-triisocyanate, triphenylmethane-4,4 ', 4" -triisocyanate, 1,6,11-undecane triisocyanate, 1,3,5-triisocyanate benzene, methyl triisocyanate silane, ethyl triisocyanate silane, isopropyl triisocyanate silane, butyl triisocyanate silane, phenyl triisocyanate silane, and tetraisocyanatesilane.

The composition containing an isocyanate group can be used alone or in combination of two or more. Furthermore, dimers and trimers of the above-described composition containing an isocyanate group can be used, and the trimer is preferably in the form of a biuret or an isocyanurate.

Further, it is also possible to use the composition containing an isocyanate group as a mixture with a compound reactive with an isocyanate group. For example, it can be mixed with a polyol to form a mixture having a urethane bond, or a mixture containing a polyurea by mixing with a polyamine, or a mixture containing a polyamide by mixing with a polycarboxylic acid. The resulting mixture can be adjusted to have an NCO/OH equivalent ratio, NCO/NH₂ equivalent ratio, NCO/COOH equivalent ratio, each of which is greater than 1, and it is also possible to intentionally leave the isocyanate group.

### Urethane Prepolymer

Of the above-specified compositions containing an isocyanate group, it is more preferable that the composition be a polymer having an isocyanate group since a film can be formed without impairing the texture of the hydrogel.

Specifically, a urethane bond-containing mixture (hereinafter also referred to as urethane prepolymer) having a terminal isocyanate group obtained by reacting a polyol component and a diisocyanate component is more preferable.

The combination of the polyol compound and the diisocyanate compound is not particularly limited, and any combination of each of the polyol compounds and each of the diisocyanate compounds can be used. For example, a urethane prepolymer obtained from the combination described below is preferable in terms of adjustment of physical properties, cost, and ease of availability. Specifically, preferred urethane prepolymers are obtained by at least one kind selected from polyoxyethylene glycol, polyoxypropylene glycol, and polyoxypropylene triol and at least one kind selected from TDI, MDI, HDI, XDI, and H6-XDI.

The polyol compound is not particularly limited, and may be any of polyether polyol, polyester polyol, acrylic polyol, polycarbonate polyol, and other polyols. These polyols may be used singly or in combination. Preferable specific examples include, but are not limited to, polyethylene glycol, polypropylene glycol, polyoxyethylene glycol, polyoxypropylene glycol, polyoxypropylene triol, polytetramethylene ether glycol, polymer polyol, poly(ethylene adipate), poly(diethylene adipate), poly(propylene adipate), poly(tetramethylene adipate), poly(hexamethylene adipate), poly (neopentylene adipate), poly-ε-caprolactone, poly(hexamethylene carbonate), and silicone polyol. Also, natural polyol compounds such as castor oil may be used.

Since polyol compounds have excellent physical properties after curing, a polyether polyol preferably has a number average molecular weight of from 400 to 20,000 and more preferably from 1,000 to 4,000.

The NCO% of the urethane prepolymer is preferably in the range of from 1 to 25 percent, and more preferably in the range of from 5 to 15 percent. The urethane prepolymer having this range of NCO% can form a uniform film by coating without air bubbles in a film to be formed.

The reaction between the polyol compound and the diisocyanate compound is not particularly limited. For example, a method can be utilized in which a polyol compound and a diisocyanate compound having the above-mentioned amount ratio are heated and stirred at 50 to 100 degrees C. Optionally, a urethanation catalyst such as an organotin compound, organic bismuth or a tertiary amine can be used.

### Peeling-off Strength of Film

As described above, the film is extremely firmly glued to the hydrogel.

Therefore, when the peeling-off strength is measured by a peeling-off test, the hydrogel structure of the present disclosure has a film peeling-off strength of 1.0 N/mm or more.

The peeling-off strength can be measured according to the method described in JIS Z 0237:2009 10.4.1 format except that 180 degree peeling-off adhesion force against the test plate is changed to 90 degrees.

More specifically, the peeling-off strength can be measured by the following peeling-off test.

### Peeling-off Strength by Peeling-off Test

0.1 g/cm² of a cyanoacrylate glue (cyanon, available from KOATSU GAS KOGYO CO., LTD.) is glued to both sides of a test piece (300 ± 5 mm × 24 ± 0.5 mm × 10 ± 0.1 mm) of a hydrogel structure having a film on one surface via a PET film. The PET film on the hydrogel side of the test piece is fixed on a flat base of a combined device of an electric measuring stand (manufactured by Imada Co., Ltd.) and a 90 degree peel testing fixture (P90-200N, manufactured by IMADA CO.,LTD.). The PET film on the film side of the test piece is pulled upward at one end of the surface of the PET film using the 90 degree peel testing fixture with a digital force gauge of 5N at 50 mm/min. The peeling-off strength of the test piece is measured until the one end of the PET film is raised 10.0 cm. The maximum of the measuring results between 2.5 cm to 7.5 cm is determined as the peeling-off strength (N/mm).

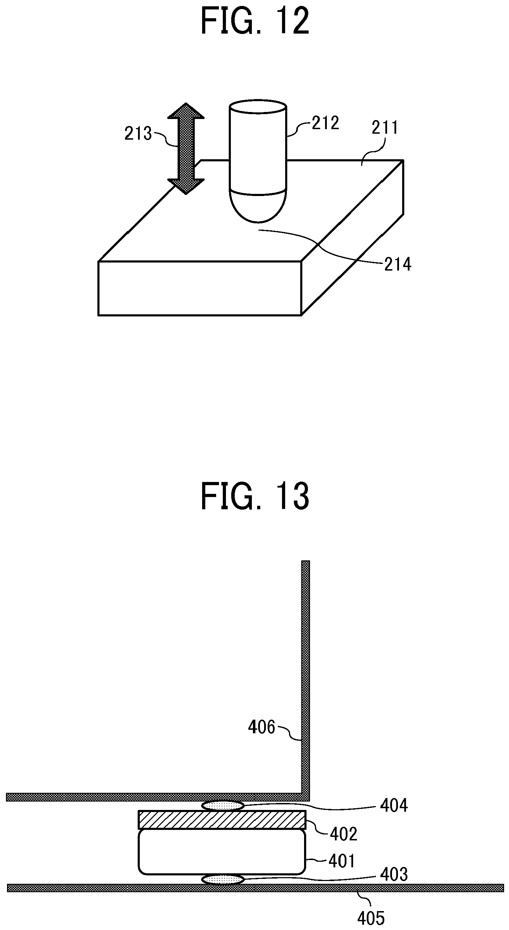

The peeling-off test will be further described in detail with reference to FIG. 13.

As illustrated in FIG. 13, a test piece (300 ± 5 mm in length × 24 ± 0.5 mm in width × 10 ± 0.1 mm in height) having a film 402 formed on the surface of a hydrogel structure (body) 401 is prepared.

The following measurements are conducted in an environment of 25 degrees C and 65 percent RH.

Between the hydrogel structure (body) 401 and a PET film 405, 0.1 g/cm² of a cyanoacrylate glue 403 is placed on a droplet. Thereafter, a force of 1 N/cm² is applied to the hydrogel structure (body) 401 and the PET film 405 to bond the cyanoacrylate glue 403 with the pressure. Thereafter, the hydrogel structure (body) 401, the PET film 405, and the cyanoacrylate glue 403 are glued.

Similarly, 0.1 g/cm² of a cyanoacrylate glue 404 is placed between the film 402 and a PET film 406 to glue them.

The PET film is not particularly limited and can be suitably selected to suit to a particular application. For example, a polyethylene terephthalate film having a thickness of 25 µm, more specifically, a PET film (Tetoron G2, 25 µm, manufactured by TEIJIN FILM SOLUTIONS LIMITED can be used.

The cyanoacrylate glue is not particularly limited and can be suitably selected to suit to a particular application. For example, cyanone (glue, manufactured by KOATSU GAS KOGYO CO., LTD.) can be used.

Next, the PET film on the hydrogel side of the test piece is fixed to the flat base of the combined device of the electric measuring stand and the 90 degree peel testing fixture.

The electric measuring stand and the 90 degree peel testing fixture are not particularly limited and can be suitably selected to suit to a particular application. For example, an electric measuring stand manufactured by Imada Co., Ltd. and a 90 degree peel testing fixture of P90-200N, manufactured by Imada Co., Ltd. can be used.

Next, the PET film on the film side in the test piece is pulled upward at one end of the surface of the PET film with a force of digital force gauge 5N at 50 mm/min using a 90 degree peel testing fixture.

The digital force gauge 5N is not particularly limited and can be suitably selected to suit to a particular application. For example, a digital force gauge manufactured by IMADA CO., LTD. can be used.

Thereafter, the tensile strength in the test piece is measured until the one end of the PET film is raised 10.0 cm. The maximum of the measurement result between 2.5 cm to 7.5 cm is defined as the peeling-off strength (N/mm).

### Method of Forming Film of First Embodiment

In the method of manufacturing the hydrogel structure of the present disclosure, a film is formed by bringing a composition containing an isocyanate group into contact with the surface of the hydrogel structure.

For example, the method of forming a film on the hydrogel structure (body) is as follows:
For example, a method of applying a composition containing an isocyanate group to the surface of a hydrogel structure can be utilized. Examples of the application method include, but are not limited to, dip coating, coating with a brush, and spraying or discharging droplets from an inkjet head.

The above-mentioned composition can be diluted with an arbitrary solvent for the purpose of improving the handling during application.

For example, the composition can be diluted with water, methanol, ethanol, isopropanol, propyl alcohol, isobutyl alcohol, 1 -butanol, 2-butanol, acetone, methyl ethyl ketone (MEK), methylisobutyl ketone (MIBK), diisobutyl ketone (DIBK), diacetone alcohol, anone, isophorone, methylacetate, ethylacetate, propylacetate, isopropylacetate, butylacetate, amylacetate, pentylacetate, toluene, xylene, n-hexane, cyclohexane, methylcyclohexane, n-heptane, propylene glycol monomethyl ether acetate, tetrahydrofuran , diethyl ether, dimethylformamide, dimethylsulfoxide (DMSO), ethyl lactate, γ-butyrolactone, triacetin, benzen, ethylbenzene, xylene, styrene monomer, coal tar naphtha, cellosolve, Solvesso™, SOLFIT, Ipuzoru, mineral spirits, petroleum benzene, limonene, or Shellsol.

The proportion of the solvent contained in the composition containing an isocyanate group to the total amount of the composition is preferably from 20 to 80 percent by mass and more preferably from 30 to 50 percent by mass. Within this range, the film thickness at the time of application can be easily controlled.

### Second Embodiment of Film

As described above, the film formed on the surface of the hydrogel structure may have a different composition between the side of the hydrogel structure and the opposite side to the side of the hydrogel structure. The film has an undercoat portion positioned on the side of the hydrogel structure and an overcoat portion positioned on the opposite side to the hydrogel structure side, which has a different composition from that of the undercoat portion.

The film on the side of the hydrogel structure, that is, the film on the undercoat portion is as described in First Embodiment of Film.

On the other hand, the film on the side opposite to the side of the hydrogel structure, that is, the film of the overcoat portion is more preferably made of a non-reactive polymer non-reactive to the hydrogel structure (body).

Examples of materials for the non-reactive polymer include the following. Vinyl chloride, vinyl acetate, polyolefin, polyurethane, polyether, polyvinyl alcohol (PVA), polyester, polyethylene terephthalate, polyphenylene sulfide (PPS), polypropylene, polyethylene, cellophane, acetate, polystyrene, polycarbonate, nylon, polyimide, fluororesin, cellulose acetate, paraffin wax, and a plurality of these copolymers. These may be terminally modified. Of these, vinyl chloride, vinyl acetate, polyolefin, polyurethane, polyether, PVA, a polymer or a plurality of copolymers are preferable because these have good applicability and film-forming properties and are soluble in general purpose solvents. Specifically, a vinyl chloride-vinyl acetate copolymer, an ethylene-vinyl acetate copolymer, an acid-modified polyolefin, and a polyether polyurethane.

The film of the overcoat portion can be formed in the same manner as in Method of Forming Film of First Embodiment described above. For example, materials containing a non-reactive polymer non-reactive to a hydrogel structure are applied onto the surface of the composition containing an isocyanate group to bring them into contact with the hydrogel structure.

By providing the overcoat portion to the film, various features can be imparted to the hydrogel structure as described above. Surface properties and physical properties can be modified and various properties such as anti-drying property, anti-fouling property, antiseptic property, anti-fungal property, form retaining property, heat resistance/low temperature properties, tackiness enhancement, slippage prevention (slippage change), and insulating properties can be imparted.

### Other Features of Film

### Water Vapor Transmission Rate of Film

The water vapor transmission rate of the film is preferably 400 [g/(m²·day)] or less and more preferably from 10 to 200 [g/(m²·day)]. When the water vapor transmission rate of the film is within this range, anti-drying property is imparted while maintaining the texture of the hydrogel structure.

### Film Thickness

The average thickness of the film is preferably from 1 to 1,000 µm and more preferably from 5 to 200 µm. Within these ranges, while the texture of the hydrogel is maintained, the effect of applying the film is easily obtained.

The average thickness means the average value of the thickness of 10 points.

### Other Component Added to Film

The film may contain other components.

Such other components are not particularly limited and can be suitably selected to suit to a particular application. Examples include, but are not limited to, the following.

The film may contain a pigment or dye as a colorant, and inorganic particulate or resin particulate as a colorant and a surface treating agent. In addition, it may contain a stabilizer, a polymerization initiator, a viscosity modifier, an adhesion promoter, an antioxidant, an anti-aging agent, a cross-linking accelerator, an ultraviolet absorbent, a plasticizer, a preservative, a dispersant, a surfactant, etc.

### Internal Organ Model

A preferred application example of the hydrogel structure of the present disclosure is an internal organ model for use in practicing procedures such as a surgical operation. This internal organ model will be described below.

The internal organ model of the present disclosure includes a hydrogel structure (body) composed of water, a polymer, and a mineral, and a film disposed on the surface of the hydrogel structure.

Also, the film layer disposed on the surface of the body of the hydrogel structure of the internal organ model of the present disclosure may be formed of a homogeneous film layer composed of the same composition as described above. Alternatively, the film may have portions having different compositions in the film layer. More specifically, the film may have different compositions on the side of the hydrogel structure side and the side opposite to the side of the hydrogel structure. More specifically, the film has an undercoat portion positioned on the side of the hydrogel structure and an overcoat portion positioned on the opposite side to the hydrogel structure, which has a different composition from that of the undercoat portion.

The hydrogel structure (body) and the film are as described above (hydrogel structure).

As described above, the film of the hydrogel structure of the present disclosure has an extremely strong adhesive force, so that the film does not peel off from the hydrogel structure (body). Also, the film surface of the hydrogel structure of the present disclosure is less sticky and has excellent operability.

Therefore, the internal organ model using the hydrogel structure of the present disclosure has the following features.

The internal organ model of the present disclosure has elasticity equal to or very close to a real internal organ. Further, since the internal organ model of the present disclosure has extensibility and can obtain the same tactile sensation as a real internal organ, the sharpness of a scalpel, scissors, etc., to the hydrogel structure is very close to that of a target internal organ.

According to the internal organ model of the present disclosure, an internal organ model for a procedure practicing such as a surgical operation can be provided which has a real texture, sharpness, sewing conditions, and good handling properties.

For example, the internal organ model described in JP-2015-138192-A mentioned above is sticky and feels unpleasant. In addition, for example, when trying to operate the hydrogel structure using an instrument, if the instrument touches the film, due to viscosity of the film, the components of the film adheres to the instrument. This makes the instrument sticky and degrades operability,

Regarding the internal organ model described in JP-2017-26791-A mentioned above, the film and the hydrogel (body) are not well attached to each other so that the film is peeled off when a strong external force is applied. For this reason, when the internal organ model described in JP-2017-26791-A mentioned above is cut with a scalpel or scissors, the film peels off.

Further, in the present disclosure, as described above, the film has different compositions on the hydrogel structure side and the side opposite to the hydrogel structure. It is possible to form a film having excellent adhesion/attachability to the hydrogel on the undercoat portion and a film having a different composition from the undercoat portion on the overcoat portion. Therefore, it is possible to impart various features to the internal organ model. For example, it is possible to impart anti-drying property, antiseptic property, and excellent operability to an internal organ model, prevent the surface from becoming viscous, and eliminate trouble during suture training.

The part to which the internal organ model of the present disclosure can apply has no particular limit and can reproduce every internal organ in a human body, including brain, heart, gullet, stomach, bladder, small intestines, large intestines, liver, kidney, spleen, pancreas, and womb.

Moreover, the internal organ model of the present disclosure truly reproduces internal structures of vessels, malady, etc., has textures and bites by a knife extremely close to those of a target internal organ, and can be dissected by a surgical scalpel. Therefore, for example, the internal organ model can be preferably used for practicing a procedure for a doctor, a resident, a medical student, etc. working in a medical department of a college, a hospital, etc. Also, before shipping a manufactured surgical scalpel, the internal organ model can be used to examine the sharpness of the surgical scalpel, and check the sharpness of the surgical scalpel before conducting surgery.

As a representative example of the internal organ model, a liver model illustrated in FIG. 9 will be described as an example.

Livers are the largest internal organs located on the right side of the upper abdomen and below ribs. It weighs 1.2 to 1.5 kg in the case of an adult human. Livers change nutrition taken in from food into a form a human body can utilize and control "metabolism"

(store and supply), detox to detoxify harmful materials, and secretion of bile which helps decomposition and absorption of fats, etc.

As illustrated in FIG. 9, a liver 30 is fixed to anterior abdominal wall by a falciform ligament 33 and separated into a right lobe 34 and a left lobe 35 by the main separating plane (Cantlie line) linking a cholecyst 31 and an inferior vena cava 32.

In FIG. 9, the reference numeral 36 denotes an outer skin (membrane) and 37 denotes a tumor. The reference numeral 38 represents the body of the liver.

Hepatectomy is an operation to cut out a part of the liver. Diseases to which hepatectomy is applied are, for example, cancer of liver (primary cancer of liver) in most cases, metastatic cancer of the liver, benign hepatic tumor, injury of the liver, etc.

Hepatectomy are classified into partial ablation, subsegmentectomy, segmental resection, lobectomy, extended lobectomy, and risegmentectomy depending on how to cut. These parts are not marked on an actual liver. Therefore, in operation, surgeons tie up portals or hepatic artery to block the nutrition therefor or infuse pigment into vessels to change the color thereof to recognize borders. Thereafter, the surgeon cuts the liver with various devices such as cautery (electrosurgical) knife, harmonic scalpel (ultrasonic vibration surgical instrument), CUSA (ultrasonic surgical aspirator), and MICROTAZE (microwave surgical instrument).

In such a case, the internal organ model of the present disclosure can be suitably used for an operation simulation because the internal organ model can truly reproduce internal structures such as vessels and malady, has textures and bites by a knife extremely close to those of a target internal organ, and can be dissected by a surgical scalpel.

### Method of Manufacturing Internal Organ Model

The internal organ model can be manufactured according to the above-described method of manufacturing a hydrogel structure.

In some cases, an internal organ model has a complex form. To reproduce such a complex form, it is suitable to employ, for example, a method of manufacturing a mold for an internal organ model by appropriate processing and injecting a hydrogel precursor solution into the mold followed by curing or a method of directly fabricating an internal organ model by a 3D printer.

### Film Forming

In the internal organ model of the present disclosure, the film can be formed according to the above-mentioned method of forming a film. It is necessary to pay attention to the type of material to be used, film thickness, etc., so as to demonstrate texture and physical properties close to a real internal organ.

### Other Features of Internal Organ Model

### Color of Film

The colors of the hydrogel structure (body) and the film in an internal organ model can be appropriately selected to suit to requests by a user, a worker, etc. For example, the film can be formed in a color different from that of the body of the hydrogel structure.

Having generally described preferred embodiments of this disclosure, further understanding can be obtained by reference to certain specific examples which are provided herein for the purpose of illustration only and are not intended to be limiting. In the descriptions in the following examples, the numbers represent weight ratios in parts, unless otherwise specified.

### EXAMPLES

Next, embodiments of the present disclosure are described in detail with reference to Examples but are not limited thereto.

### Example 1

### Preparation of Liquid Material for Forming Hydrogel

A liquid material is obtained by the method of preparing a hydrogel precursor solution described in JP-2017-26791-A mentioned above. Pure water described below means deionized water subjected to vacuum degassing for 10 minutes.

2 parts of sodium peroxodisulfate (manufactured by Wako Pure Chemical Industries, Ltd.) was dissolved in 98 parts of pure water to prepare an aqueous solution as a liquid initiator.

Thereafter, while stirring 195 parts of pure water, 8 parts of synthesized hectorite (laponite XLG, manufactured by RockWood) having a composition of [Mg_{5.34}Li_{0.66}Si₈O₂₀(OH)₄]Na⁻_{0.66} as the lamellar clay mineral was added little by little to the pure water followed by stirring to prepare a liquid dispersion.

Next, as a polymerizable monomer, 20 parts of N,N-dimethylacrylamide (manufactured by Wako Pure Chemical Industries, Ltd.) which had passed through an active alumina column to remove a polymerization inhibitor was added to the liquid dispersion.

Next, 0.2 parts of dodecyl sodium sulfate (manufactured by Wako Pure Chemical Industries, Ltd.) was admixed as a surfactant.

Thereafter, 0.1 parts of tetramethyl ethylenediamine (manufactured by Wako Pure Chemical Industries, Ltd.) was added while cooling down the thus-obtained liquid mixture in an ice bath.

After 5 parts of the liquid initiator was admixed and stirred, the resultant was decompressed and degassed for 10 minutes to obtain a liquid material for forming a homogeneous hydrogel.

### Preparation of Hydrogel Structure 1

The thus-obtained liquid material for forming a hydrogel was poured into a styrol square type case 1 type (manufactured by AS ONE CORPORATION), which was sealed off from air and left still at 25 degrees C for 20 hours. The resultant was taken out from the mold to obtain a hydrogel structure 1.

### Preparation of Hydrogel Structure 2

A mold capable of manufacturing a form of a round wire coil spring LR 25 × 60 was prepared, and a liquid material for forming a hydrogel was poured into the mold. The mold was left still at 25 degrees C for 20 hours while the mold was sealed off from air and thereafter taken out from the mold to obtain a spherical hydrogel structure 2.

### Composition 1 Containing Compound Having Isocyanate Group

90 parts of a water-soluble polyisocyanate (Aquagel, manufactured by Mitsubishi Chemical Infratec Co., Ltd.) as a urethane prepolymer and 30 parts of γ-butyrolactone were stirred to prepare Composition 1 containing an isocyanate group. In the composition 1 containing an isocyanate group, the proportion of NCO was 9.6 percent and the solvent accounted for 40 percent by mass of the total mass.

### Preparation of Film-attached Hydrogel Structure 1-1

Composition 1 containing an isocyanate group was applied to the surface of the hydrogel structure 1 by the dipping method. A film-attached hydrogel structure 1-1 having a thickness of 30 µm was obtained.

### Preparation of Film-attached Hydrogel Structure 1-2

Composition 1 containing an isocyanate group was applied to the surface of the hydrogel structure 2 by the dipping method. A film-attached hydrogel structure 1-2 having a thickness of 30 µm was obtained.

### Evaluation

### Surface Change after Indenting

A spherical indenter CT-Bϕ10 (manufactured by Japan Instrumentation System Co., Ltd.) for compression was pressed in the thus-obtained film-attached hydrogel structure 1-1 a depth of 1.0 mm per second for 5 minutes (total number of indenting of 300 times), and thereafter whether or not peeling-off occurred on the surface was observed.

A method of evaluating the surface change after the indenting (pressing-in) will be described.

A test method of pressing the indenter into the hydrogel structure will be described with reference to FIG. 12. The spherical indenter 212 for compression was pressed into a central portion 214 of the hydrogel structure 211 to be evaluated. The indenter was repeatedly presseed in, so that the indenter moves up and down (see 213). In FIG. 12, the reference numeral 213 denotes the operation direction of the indenter.
A: No peeling-off of the film occur
B: Film was peeled-off.

### Form Retention

Form retention of the resulting film-attached hydrogel structure 1-2 was evaluated. The film-attached hydrogel structure 1-2 was left undone in an environment of 25 degrees C and 50 percent RH for 30 days, and the changes in outer diameter/thickness/free length were observed.
A: All dimensional changes fell below 5 percent
B: Dimensional change of 5 percent or more occurred in some item

### Peeling-off Strength

For the resulting film-attached hydrogel structure 1-1, the peeling-off strength was measured by the following peeling-off test.

As illustrated in FIG. 13, a test piece (300 ± 5 mm × 24 ± 0.5 mm × 10 ± 0.1 mm) having a film on one surface of the hydrogel structure 1-1 was used, and both sides of the test piece were glued with 0.1 g/cm² cyanoacrylate glue (cyanone, manufactured by KOATSU GAS KOGYO CO., Ltd.) via a PET film.

Next, the PET film on the hydrogel side of the test piece was fixed to the flat base of the combined device of an electric measuring stand (manufactured by IMADA CO., LTD.) and a 90 degree peel testing fixture (P90-200N. manufactured by Imada Co., Ltd.).

The PET film on the film side of the test piece was pulled upward at one end of the surface of the PET film with a force of digital force gauge 5N at 50 mm/min using a 90 degree peel testing fixture.

The tensile strength in the test piece was measured until the one end of the PET film was raised 10.0 cm. The maximum of the measurement result between 2.5 cm to 7.5 cm was defined as the peeling-off strength (N/mm).

### Comparative Example 1

### Preparation of Hydrogel Structure 101 without Film

The hydrogel structure 1 was not subjected to film forming to obtain a film-free hydrogel structure 101.

This film-free hydrogel structure 101 was subjected to evaluation of the form retention property described in Example 1. Since a film was not formed, the film-free hydrogel structure 101 was not subjected to the surface change after indenting.

Also, the peeling-off strength by the peeling-off test was not measured because no film was formed.

### Comparative Example 2

### Preparation of Film-attached Hydrogel Structure 102-1

A film-attached hydrogel structure 102-1 was prepared by utilizing the same method as the film formation described in the paragraph [0055] of JP-A-2017-26791 mentioned above. That is, onto the surface of the hydrogel structure 1, a toluene/MEK liquid mixture of a vinyl chloride-vinyl acetate copolymer (PLASTI COAT #100, solid content of 30 percent, manufactured by DAIKYO CHEMICAL CO., LTD.) was applied by a dip coating method. Thereafter, a film having a thickness of 30 µm was formed to prepare a film-attached hydrogel structure 102-1.

### Preparation of Film-attached Hydrogel Structure 102-2

A film-attached hydrogel structure 102-2 was prepared in the same manner as in the method of preparing the film-attached hydrogel structure 102-1 except that the hydrogel structure 1 was replaced with the hydrogel 2.

The film-attached hydrogel structure 102-1 and the film-attached hydrogel structure 102-2 were evaluated regarding surface change after indentation, form retention, peeling-off strength in Example 1.

### Comparative Example 3

### Preparation of Film-attached Hydrogel Structure 103-1

A film-attached hydrogel structure 103-1 was prepared by utilizing the same method as the film formation described in the paragraph [0033] of JP-2008-156405-A mentioned above. That is, the surface of the hydrogel structure 1 was subjected to coating by an acrylic resin composition (urethane acrylate, Unidic V-4263, 80 parts, manufactured by Dainippon Ink & Chemicals, Inc.), hexanediol acrylate (New Frontier HDDA, 20 parts, manufactured by DKS Co. Ltd.), and an initiator (V-601, 2 parts by mass, manufactured by Wako Pure Chemical Industries, Ltd.) to form a film having a thickness of 100 microns). Next, the form was fixed by thermosetting (60 degrees C × 30 minutes) to prepare a film-attached hydrogel structure 103-1.

### Preparation of Film-attached Hydrogel Structure 103-2

A film-attached hydrogel structure 103-2 was prepared in the same manner as in the method of preparing the film-attached hydrogel structure 103-1 except that the hydrogel structure 1 was replaced with the hydrogel 2.

The film-attached hydrogel structure 103-1 and the film-attached hydrogel structure 103-2 were evaluated regarding surface change after indentation, form retention, peeling-off strength in Example 1.

**Table 1**

| | Surface change after indenting | Form retention | Peeling-off strength (N / mm) |
|---|---|---|---|
| Example 1 | A | A | 1.6 |
| Comparative Example 1 | - | B | - |
| Comparative Example 2 | B | A | 0.4 |
| Comparative Example 3 | B | A | 0.5 |

In Example 1, since the film gluing to the surface was formed on the hydrogel, no peeling-off occurred between the film and the body of the hydrogel structure after indenting, and no change occurred to the form after the indenting. In addition, the hydrogel structure did not dry over time, and the form was retained.

In Comparative Example 1, since no film was formed on the surface of the hydrogel, moisture evaporated from the hydrogel and the form was not retained.

In Comparative Example 2 and Comparative Example 3, a gap appeared between the hydrogel and the film due to the indentation. Therefore, after the indentation, a change in the surface form was observed.

Therefore, as seen in the results of Example 1, the hydrogel structure of the present disclosure was found that the hydrogel structure was prevented from drying and had excellent form retention, the film was not peeled off from the hydrogel structure, and the surface form did not change by indenting.

### Example 2

### Preparation of Film-attached Hydrogel Structure 2

Composition 1 containing an isocyanate group of Example 1 was applied to the surface of the hydrogel structure 1 by a dipping method to form a film having a thickness of 30 µm. Further, a toluene/MEK liquid mixture (PLASTI COAT #100, solid content of 30 percent) of a vinyl chloride-vinyl acetate copolymer was applied by a dipping method. A film-attached hydrogel structure 2 having a film having a total thickness of 60 µm was obtained.

### Evaluation

The mass reduction rate, the mass reduction rate after indenting (hereinafter collectively referred to as mass reduction rate), and the surface change after indenting were evaluated. The peeling-off strength was also measured. The peeling-off test was conducted in the same manner as in the peeling-off test in Example 1 except that the film 402 contained the undercoat portion and the overcoat portion in FIG. 13. The evaluation results are shown in Table 2.

### Mass Reduction Rate

The mass change of the film-attached hydrogel structure 2 was measured under the following conditions. The mass change was also measured for Examples 2 to 12 and Comparative Examples 1 to 3.
Condition 1) After forming the film, the hydrogel was stored at 25 degrees C and humidity of 50 percent RH for one week.
Condition 2) After the film formation, spherical indenter CT-B ϕ 10 (manufactured by Japan Instrumentation System Co., Ltd.) for compression was pressed into the sample a depth of 1.0 mm per second (FIG. 12) for 5 minutes (total number of indenting of 300 times). Thereafter, the hydrogel structure was stored at 25 degrees C and humidity of 50 percent RH for one week.

### Surface Change after Indenting

The hydrogel structures were evaluated in the same manner as in Evaluation of surface change after indentation in Example 1.

### Peeling-off Strength

The peeling-off test was conducted in the same manner as in the peeling-off test in Example 1 except that the film 402 included the undercoat portion and the overcoat portion in FIG. 13.

In Examples 3 to 7, the type of the film of the undercoat portion was changed from the film in Example 2, that is, the type of the composition containing an isocyanate group was changed.

### Example 3

### Preparation of Film-attached Hydrogel Structure 3

25 parts of octadecyl isocyanate and 75 parts of toluene were mixed and applied to the surface of the hydrogel structure 1 by a dipping method to form a film having a thickness of 5 µm. Further, a toluene/MEK liquid mixture (PLASTI COAT #100, solid content of 30 percent) of a vinyl chloride-vinyl acetate copolymer was applied by a dipping method. A film-attached hydrogel structure 3 having a film having a total thickness of 35 µm was obtained.

### Evaluation

The mass reduction rate and the surface change after indentation were evaluated for the film-attached hydrogel structure 3. The peeling-off strength was also measured. The evaluation results are shown in Table 2.

### Example 4

### Preparation of Film-attached Hydrogel Structure 4

25 parts of phenyl isocyanate and 75 parts of toluene were mixed and applied to the surface of the hydrogel structure 1 by a dipping method to form a film having a thickness of 5 µm. Further, a toluene/MEK liquid mixture (PLASTI COAT # 100, solid content 30 percent) of a vinyl chloride-vinyl acetate copolymer was applied by a dipping method to obtain a film-attached hydrogel structure 4 having a total film thickness of 35 µm.

### Evaluation

The mass reduction rate and the surface change after indentation were evaluated for the film-attached hydrogel structure 4. The peeling-off strength was also measured. The evaluation results are shown in Table 2.

### Example 5

### Composition 2 Containing Compound Having Isocyanate Group

A separable flask equipped with a temperature control device, a stirring blade, a nitrogen introduction tube, and a pressure reduction port was prepared. Polypropylene glycol 2000 (PPG 2000, manufactured by Wako Pure Chemical Industries, Ltd.) and 4,4'-diphenylmethane diisocyanate (MDI, manufactured by Tokyo Chemical Industry Co., Ltd.) were reacted in the separable flask in a nitrogen atmosphere at 90 degrees C for 4 hours to prepare a urethane prepolymer. The urethane prepolymer, γ-butyrolactone (manufactured by Wako Pure Chemical Industries, Ltd.) as a diluent, and silicone oil KF-96 (manufactured by Shin-Etsu Silicone Co., Ltd.) as a foam stabilizer were admixed to obtain a composition 2 containing an isocyanate group. In the composition 2 containing an isocyanate group, the proportion of NCO was 8.9 percent and the solvent accounted for 41 percent by mass of the total mass.

### Preparation of Film-attached Hydrogel Structure 5

Composition 2 containing an isocyanate group was applied to the surface of the hydrogel structure 1 by a dipping method to form a film having a thickness of 30 µm. Further, a toluene/MEK liquid mixture (PLASTI COAT #100, solid content of 30 percent) of a vinyl chloride-vinyl acetate copolymer was applied by a dipping method. A film-attached hydrogel structure 5 having a film having a total thickness of 60 µm was obtained.

### Evaluation

The mass reduction rate and the surface change after indentation were evaluated for the film-attached hydrogel structure 5. The peeling-off strength was also measured. The evaluation results are shown in Table 2.

### Example 6

### Composition 3 Containing Compound Having Isocyanate Group

The amounts of PPG 2000 and MDI were adjusted so that the total NCO% was 8.9 percent and the mixture was stirred at room temperature for one hour and diluted with ethyl acetate to prepare Composition 3 containing an isocyanate group. NCO% was 9.6 percent, and the solvent accounted for 40 percent by mass of the total mass.

### Preparation of Film-attached Hydrogel Structure 6

Composition 3 containing an isocyanate group was applied to the surface of the hydrogel structure 1 by a dipping method to evaporate the contained solvent at room temperature. Further, the resultant was entirely sealed using Lamizip® AL (manufactured by SEISANNIPPONSHA LTD.) so that the coated surface did not come into contact with the bag, and heated at 60 degrees C for 18 hours to form a film having a thickness of 30 µm. Further, a toluene/MEK liquid mixture (PLASTI COAT #100, solid content of 30 percent) of a vinyl chloride-vinyl acetate copolymer was applied by a dipping method. A film-attached hydrogel structure 6 having a film having a total thickness of 60 µm was obtained.

### Evaluation

The mass reduction rate and the surface change after indentation were evaluated for the film-attached hydrogel structure 6. The peeling-off strength was also measured. The evaluation results are shown in Table 2.

### Example 7

Composition 4 Containing Compound Having Isocyanate Group 80 parts of polyisocyanate for coating (Coronate HL, manufactured by Tosoh Corporation) as urethane prepolymer and 70 parts of ethyl acetate were stirred to prepare Composition 4 containing an isocyanate group. In the composition 4 containing an isocyanate group, the proportion of NCO was 12.7 percent and the solvent accounted for 40 percent by mass of the total mass.

### Preparation of Film-attached Hydrogel Structure 7

Composition 4 containing an isocyanate group was applied to the surface of the hydrogel structure 1 by a dipping method to form a film having a thickness of 30 µm. Further, a toluene/MEK liquid mixture (PLASTI COAT #100, solid content of 30 percent) of a vinyl chloride-vinyl acetate copolymer was applied by a dipping method. A film-attached hydrogel structure 7 having a film having a total thickness of 60 µm was obtained.

### Evaluation

The mass reduction rate and the surface change after indentation were evaluated for the film-attached hydrogel structure 7. The peeling-off strength was also measured. The evaluation results are shown in Table 2.

In Examples 8 to 10, the type of the film of the overcoat portion was changed in the film of Example 2. Examples 8 to 10 are specific examples of the non-reactive polymer forming the film of the overcoat portion.

### Example 8

### Preparation of Film-attached Hydrogel Structure 8

Composition 1 containing an isocyanate group of Example 1 was applied to the surface of the hydrogel structure 1 by a dipping method to form a film having a thickness of 30 µm. Further, a toluene solution of ethylene-vinyl acetate copolymer (Ultracene 630, solid content of 20 percent, manufactured by Tosoh Corporation) was applied by a dipping method. A film-attached hydrogel structure 8 having a film having a total thickness of 60 µm was obtained.

### Evaluation

The mass reduction rate and the surface change after the indentation were evaluated for the film-attached hydrogel structure 8. The peeling-off strength was also measured. The evaluation results are shown in Table 2.

### Example 9

### Preparation of Film-attached Hydrogel Structure 9

Composition 1 containing an isocyanate group of Example 1 was applied to the surface of the hydrogel structure 1 by a dipping method to form a film having a thickness of 30 µm. Further, an MEK/methylcyclohexane solution of an acid-modified polyolefin (Unistall H-200, solid content of 20 percent, manufactured by Mitsui Chemicals, Inc.) was applied by a dipping method. A film-attached hydrogel structure 9 having a film having a total thickness of 60 µm was obtained.

### Evaluation

The mass reduction rate and the surface change after indentation were evaluated for the film-attached hydrogel structure 9. The peeling-off strength was also measured. The evaluation results are shown in Table 2.

### Example 10

### Preparation of Film-attached Hydrogel Structure 10

Composition 1 containing an isocyanate group of Example 1 was applied to the surface of the hydrogel structure 1 by a dipping method to form a film having a thickness of 30 µm. Further, a liquid mixture (UREARNO KL-593, solid content of 35 percent, manufactured by Arakawa Chemical Industries, Ltd.) of ethyl acetate/isopropyl alcohol (ethyl acetate/IPA) of polyurethane resin was applied by a dipping method. A film-attached hydrogel structure 10 having a film having a total thickness of 60 µm was obtained.

### Evaluation

The mass reduction rate and the surface change after indentation were evaluated for the film-attached hydrogel structure 10. The peeling-off strength was also measured. The evaluation results are shown in Table 2.

**Table 2**

| | Mass Reduction Rate | Mass reduction rate after indenting [%] | Surface change after indenting | Peeling-off strength (N / mm) |
|---|---|---|---|---|
| Example 2 | 3 | 4 | A | 1.6 |
| Example 3 | 3 | 8 | A | 1.2 |
| Example 4 | 3 | 9 | A | 1.2 |
| Example 5 | 3 | 6 | A | 1.4 |
| Example 6 | 3 | 9 | A | 1.4 |
| Example 7 | 3 | 6 | A | 1.5 |
| Example 8 | 5 | 5 | A | 1.6 |
| Example 9 | 4 | 4 | A | 1.6 |
| Example 10 | 9 | 9 | A | 1.6 |
| Comparative Example 1 | 36 | 36 | - | - |
| Comparative Example 2 | 3 | 29 | B | 0.4 |
| Comparative Example 3 | 6 | 31 | B | 0.5 |

Further, the effects obtained in Examples 11 to 15 by the film of the present disclosure are as follows.

### Example 11

### Evaluation

Tackiness of the surface of the film-attached hydrogel structure 2 obtained in Example 2 was evaluated. The film-free hydrogel structure 101 obtained in Comparative Example 1 was also evaluated in the same manner. The evaluation results are shown in Table 3.

### Tackiness

The surfaces of the film-attached hydrogel structure 2 and the film-free hydrogel structure 101 were touched with the index finger and the tackiness was evaluated.
A: Not sticky when touched or no deposit from the touched part
B: Sticky when touched but no deposit from the touched part
C: Sticky when touched and a deposit from the touched part

### Example 12

### Evaluation

Surface friction of the surface of the film-attached hydrogel structure 2 obtained in Example 2 was evaluated. The hydrogel structure 101 obtained in Comparative Example 1 was also evaluated in the same manner. The evaluation results are shown in Table 3.

### Surface Friction

The test method is based on JIS K 7125 format plastic-film and sheet friction coefficient test method.
A: Static friction coefficient is less than 0.5 [-]
B: Static friction coefficient is 0.5 [-] or more

### Example 13

### Evaluation

Heat resistance/low temperature resistance of the film-attached hydrogel structure 2 obtained in Example 2 was evaluated. The hydrogel structure 101 obtained in Comparative Example 1 was also evaluated in the same manner. The evaluation results are shown in Table 3.

### Heat Resistance/Low Temperature Resistance

The hydrogel structure was placed in a thermostatic oven set at 120 degrees C for one minute and the surface property thereof was checked when taken out. Also, the hydrogel was placed in a freezer set at -18 degrees C for one minute and the surface property thereof was checked when taken out.
A: No change
B: Contraction or cracking observed on surface

### Example 14

### Preparation of Hydrogel Structure 3

Liquid material for forming a hydrogel was poured into a cylindrical mold having an inner size of 100 mm × 2 mm, sealed so as not to contain air, left undone in an environment of 25 degrees C for 20 hours, and taken out from the mold to obtain a hydrogel structure 3 of ϕ 100 mm × 2 mm.

### Preparation of Film-attached Hydrogel Structure 14

Composition 1 containing an isocyanate group of Example 1 was applied to the surface of the hydrogel structure 3 by a dipping method to form a film having a thickness of 30 µm. Further, a toluene/MEK liquid mixture (PLASTI COAT #100, solid content of 30 percent) of a vinyl chloride-vinyl acetate copolymer was applied by a dipping method. A film-attached hydrogel structure 14 having a film having a total thickness of 60 µm was obtained.

### Evaluation

Electric properties (volume resistance value) of the film-attached hydrogel structure 14 were evaluated.

### Electrical Properties

The volume resistance value was measured based on he double ring electrode method described in JIS K6911 format.
A: Volume resistivity is 10¹¹[Ω · cm] or more
B: Volume resistivity is less than 10¹¹[Ω · cm]

### Comparative Example 4

### Preparation of Hydrogel Structure 104 without Film

The hydrogel structure 3 was not subjected to film forming to obtain a film-free hydrogel structure 104.

### Evaluation

Electric properties (volume resistance value) of the film-free hydrogel structure 104 were evaluated. The evaluation results are shown in Table 3.

### Example 15

### Preparation of Hydrogel Structure 4

Liquid material for forming a hydrogel was poured into an ice making dish (domestic ice maker, ice mold, full circle ice, ice tray, sold by TOTO HOUSE) capable of making a ϕ20 mm sphere, and was left undone for 20 hours in a 25 degree environment in a sealed state so as not to prevent air from entering, whereby a spherical hydrogel structure 4 was obtained.

### Preparation of Film-attached Hydrogel Structure 15

Film-attached hydrogel structure 15 was obtained in the same manner as in the method of preparing the film-attached hydrogel structure 2 obtained in Example 2 except that the hydrogel structure 1 was replaced by the hydrogel structure 4. The film-attached hydrogel structure 15 had a film having a total thickness of 60 µm.

### Evaluation

The shock absorbing properties of the film-attached hydrogel structure 15 were evaluated. The evaluation results are shown in Table 3.

### Shock Absorbing Property

The film-attach hydrogel structure 15 was placed in a hemispherical vessel having an inner diameter of 200 mm and left undone for 30 days under an environment of 25 degrees C and 50 percent RH. Thereafter, a hen's egg was freely dropped from 30 cm high to the center portion of the vessel to check the broken state of the egg.
A: Egg was not broken
B: Egg was broken

### Comparative Example 5

### Preparation of Hydrogel Structure 105 without Film

The hydrogel structure 4 was not subjected to film forming to obtain a film-free hydrogel structure 105.

### Evaluation

The shock absorbing properties of the film-free hydrogel structure 105 were evaluated. The evaluation results are shown in Table 3.

**Table 3**

| | Film-attached | Film-free |
|---|---|---|
| Tackiness | A (Example 11) | B (Comparative Example 1) |
| Surface abrasion | A (Example 12) | B (Comparative Example 1) |
| Heat resistance | A (Example 13) | B (Comparative Example 1) |
| Low temperature resistance | A (Example 13) | B (Comparative Example 1) |
| Electric property | A (Example 14) | B (Comparative Example 4) |
| Shock absorbing property | A (Example 15) | B (Comparative Example 5) |

### Example 16

### Preparation of Internal Organ Model

First, while stirring 700 parts of deionized water, 13 parts of synthetic hectorite (Laponite XLG, manufactured by Rockwood Additives Ltd.) having a composition of [Mg_{5.34}Li_{0.66}Si₈O₂₀(OH)₄] Na⁻_{0.66} as a lamellar clay mineral was added to the deionized water little by little and 0.6 parts of 1-hydroxyethane-1,1-diphosphonic acid was further added thereto followed by stirring to prepare a liquid dispersion.

Next, 7 parts of N, N-dimethylacrylamide as a polymerizable monomer (manufactured by Wako Pure Chemical Corporation) which was caused to pass through a column of activated alumina to remove the polymerization inhibitor, 35 parts of acryloyl morpholine (manufactured by Tokyo Chemical Industry Co., Ltd.), 0.5 parts of methylenebisacrylamide (manufactured by Tokyo Chemical Industry Co., Ltd.), and 120 parts of glycerin (manufactured by Tokyo Chemical Industry Co., Ltd.) were added to the thus-obtained liquid dispersion.

Thereafter, 1 part of tetramethylethylenediamine (manufactured by Wako Pure Chemical Corporation) was added while being cooled in an ice bath. After mixing and stirring, degassing under a reduced pressure was conducted for 10 minutes. After filtration to remove impurities, a homogenized hydrogel liquid precursor was obtained.

Using an inkjet stereolithography device (Agilista, manufactured by Keyence Corporation), a mold for cast molding having a kidney-like form illustrated in FIG. 9 was prepared.

25 parts of 2 percent by mass deionized water aqueous solution of peroxo sodium disulfate (manufactured by Wako Pure Chemical Industries, Ltd.) was added to 300 parts of the hydrogel precursor. Subsequent to through stirring, the mixture was poured into the mold and sealed with the lid followed by curing reaction at 25 degrees C for two hours.

After curing, the resultant was removed from the mold and rinsed with water to prepare a liver model (without a film) having a form as illustrated in FIG. 9. This was determined as Liver model 1.

### Formation of Film of Undercoat Portion

90 parts of a water-soluble polyisocyanate (Aquagel, manufactured by Mitsubishi Chemical Infratec Co., Ltd.) and 30 parts of γ-butyrolactone were stirred to prepare a composition containing an isocyanate group. This was applied to the surface of the liver model 1 by a dip coating method to form a film of an undercoat portion having a thickness of 30 µm.

### Formation of Film of Overcoat Portion

A liquid mixture of toluene/MEK (PLASTI COAT #100, solid content of 30 percent, manufactured by Daikyo Chemical Co., Ltd.) of vinyl chloride/vinyl acetate copolymer was applied onto the film of the undercoat portion by dip coating method to form a film of an overcoat portion having a thickness of 30 µm. A liver model 2 was thus prepared.

### Example 17

### Preparation of Magenta Pigment Liquid Dispersion

The inside of a 1 L flask equipped with a mechanical stirrer, a thermometer, a nitrogen gas introducing tube, a reflux tube, and a dripping funnel was sufficiently replaced with nitrogen gas. Thereafter, 11.2 g of styrene, 2.8 g of acrylic acid, 12.0 g of lauryl methacrylate, 4.0 g of polyethylene glycol methacrylate, 4.0 g of styrene macromer, and 0.4 g of mercapto ethanol were mixed. The mixture was heated to 65 degrees C. Next, a liquid mixture of 100.8 g of styrene, 25.2 g of acrylic acid, 108.0 g of lauryl methacrylate, 36.0 g of polyethylene glycol methacrylate, 60.0 g of hydroxyethyl methacrylate, 36.0 g of styrene macromer, 3.6 g of mercapto ethanol, 2.4 g of azobisdimethyl valeronitrile, and 18.0 g of methylethyl ketone was dripped into the flask in two and a half hours. Thereafter, a liquid mixture of 0.8 g of azobismethylvaleronitrile and 18.0 g of methylethyl ketone was dripped into the flask over 0.5 hours and aged at 65 degrees C for one hour. Moreover, 0.8 g of azobismethylvaleronitrile was added. Subsequent to aging for one hour. 364 g of methylethyl ketone was added to the flask to obtain 800 g of a 50 percent by mass polymer solution.

Next, 28 g of the polymer solution, 42 g of a magenta pigment (C.I.Pigment Red 122), 13.6 g of 1 mol/L potassium hydroxide aqueous solution, 20 g of methylethyl ketone, and 13.6 g of deionized water were thoroughly stirred followed by mix-kneading using a roll mill to obtain a paste. The thus-obtained paste was charged in 200 g of deionized water. Subsequent to through stirring, methylethyl ketone and water were distilled away using an evaporator. Furthermore, the resultant was subject to filtration under a pressure with a polyvinylidene fluoride membrane filter having an average pore diameter of 5.0 µm to obtain a magenta pigment liquid dispersion having a pigment proportion of 15 percent by mass and a solid portion proportion of 20 percent by mass.

### Formation of Film of Undercoat Portion

A film of an undercoat portion having a thickness of 30 µm was formed on the surface of the liver model 1 in the same manner as in the method of Example 16.

### Formation of Film of Overcoat Portion

A liquid mixture of toluene/MEK (PLASTI COAT #100, solid content of 30 percent, manufactured by Daikyo Chemical Co., Ltd.) of vinyl chloride/vinyl acetate copolymer mixed with 0.5 percent magenta pigment liquid dispersion was applied onto the film of the undercoat portion by dip coating method to form a film of an overcoat portion having a thickness of 30 µm. A liver model 3 was thus prepared.

### Comparative Example 6

The liver model 1 (without film) prepared in Example 16 was subjected to evaluation.

### Comparative Example 7

According to Example 4 of JP-2015-138192-A, a moisturizing film was formed on the liver model 1 prepared in Example 16. Specifically, the liver model was immersed in a 10 percent by mass aqueous solution of glycerin for 1 minute to form a moisturizing film on the surface of the liver model to prepare a liver model 4.

### Comparative Example 8

According to Example 1 of JP-2017-026791-A, a film was formed on the liver model 1 prepared in Example 16. Specifically, PLASTI COAT #100 (manufactured by DAIKYO CHEMICAL CO., LTD) was applied to the surface of the liver model 1 by a dipping method to form a film having a thickness of 30 µm to obtain a liver model 5.

### Comparative Example 9

According to Example 2 of JP 2017-26791-A, a film was formed on the liver model 1 prepared in Example 16. Specifically, a heat shrink film (D-955, manufactured by Sealed Air Japan G.K.) was used to heat the surface of the liver model 1 with a heat gun to form a film having a thickness of 30 µm to prepare a liver model 6.

### Evaluation

The liver models 1 to 6 prepared in Example 16, Example 17, and Comparative Examples 6 to 9 were subjected to the following evaluation. The evaluation results are shown in Tables 4 to 7.

### 1 Appearance

The appearance of the liver model prepared as described above was visually checked. As compared with the state without a film, whether the liver model was sufficiently transparent to see the inside or the film had no wrinkles was checked.

### 2 Texture

The texture of the liver model was checked by touching with a hand. Whether the flexibility of the hydrogel was maintained was checked as compared with the film-free state.

### 3 Drying Property

The liver model was stored in an atmosphere of 25 degrees C and 50 percent RH for one week. The mass change of the liver model was checked before and after the storage.

### 4 Sharpness by Endoscopic Cannula

The liver model was set in an endoscopic training box, and a surgeon resected a tumor (tumor 37 illustrated in FIG. 9). At that time, the sharpness of the organ by the endoscopic cannula was checked.

### 5 How Tumor Resection looked

In the operation in 4 mentioned above, a sense of distance (depth perception) such that how far it was cut and the difference from a real internal organ were checked.

### 6 Suturability

After removal of the tumor, the surgeon sutured the cavity. At this time, easiness of penetration of the surgical needle and the state when the thread was stretched were checked.

**Table 4**

| | Appearance | Texture |
|---|---|---|
| Example 16 | Transparent with no drawback such as wrinkle | Flexibility maintained, on a par with film-free |
| Example 17 | Colored but transparent and visible inside with no drawback such as wrinkle | Flexibility maintained, on a par with film-free |
| Comparative Example 6 | Transparent | Just hydrogel |
| Comparative Example 7 | No drawback about transparency or wrinkle | Flexibility maintained with surface tackiness |
| Comparative Example 8 | No drawback transparency or wrinkle | Flexibility maintained, on a par with film-free |
| Comparative Example 9 | Partially wrinkled | Flexibility maintained, on a par with film-free |

**Table 5**

| | Drying property | Sharpness by endoscopic cannula |
|---|---|---|
| | Mass reduction rate (percent by mass) | |
| Example 16 | 2 | Close to real, no peeling-off |
| Example 17 | 2 | Close to real, no peeling-off |
| Comparative Example 6 | 35 | Close to real, but sense of discomfort at the start of cutting |
| Comparative Example 7 | 33 | Close to real, but sense of discomfort at the start of cutting |
| Comparative Example 8 | None | Close to real, but peeled off in some occasions |
| Comparative Example 9 | None | Close to real, but peeled off in some occasions |

**Table 6**

| | How tumor resection looked |
|---|---|
| Example 16 | Tumor resection part slightly recognized |
| Example 17 | Tumor resection part clearly recognized |
| Comparative Example 6 | Tumor resection part recognized but difficult to see when replaced again in some occasions |
| Comparative Example 7 | Tumor resection part recognized but difficult to see when replaced again in some occasions |
| Comparative Example 8 | Tumor resection part slightly recognized |
| Comparative Example 9 | Tumor resection part slightly recognized |

**Table 7**

| | Suturability |
|---|---|
| Example 16 | Close to real, needle smoothly penetrates, not cut when thread pulled, surrounding close together, suturable |
| Example 17 | Close to real, needle smoothly penetrates, not cut when thread pulled, surrounding close together, suturable |
| Comparative Example 6 | Close to real, needle smoothly penetrates, gel breaks off when needle hooked close to cut surface and thread pulled hard in some occasions |
| Comparative Example 7 | Close to real, needle smoothly penetrates, gel breaks off when needle hooked close to cut surface and thread pulled hard in some occasions |
| Comparative Example 8 | Close to real, needle smoothly penetrates, gel film peeled off when thread pulled hard in some occasions |
| Comparative Example 9 | Close to real, needle smoothly penetrates, gel film peeled off when thread pulled hard in some occasions |

As seen in the results of Examples 16 and 17, the internal organ model of the present disclosure is confirmed to have a real texture, sharpness, suture conditions, and good handling properties as an internal organ model for a procedure practicing such as a surgical operation.

In Comparative Example 7, the surface was sticky. In the sharpness confirmation test using the endoscopic cannula, the endoscopic cannula became sticky at the start of cutting, which gave a sense of discomfort, resulting in degradation of operability.

In Comparative Examples 8 and 9, the adhesion between the film and the hydrogel was not high, and in the operation using the endoscopic cannula and the operation of the suture, the film was peeled off.

The aspects of the present disclosure are, for example, as follows:
1. A hydrogel structure includes a hydrogel body containing water, a polymer, and a mineral and a film on the surface of the hydrogel body, wherein the film has a peeling-off strength of 1.0 N/mm or more.
2. The hydrogel structure includes a hydrogel body containing water, a polymer, and a mineral and a film on the surface of the hydrogel body, wherein the film has a structure of Si-CO-NH- on the side of the hydrogel body.
3. The hydrogel structure includes a hydrogel body containing water, a polymer, and a mineral and a film on the surface of the hydrogel body, wherein the film on the side of the hydrogel body is formed of a composition containing an isocyanate group.
4. The hydrogel structure according to any one of 1 to 3 mentioned above, wherein the film has different compositions on the side of the hydrogel body and on the opposite side to the side of the hydrogel body.
5. The hydrogel structure according to 4 mentioned above, wherein the film on the opposite side contains a polymer non-reactive to the hydrogel body.
6. The hydrogel structure according to any one of 1 to 5 mentioned above, wherein the film has a water vapor transmission rate of 400 g/(m²·day) or less.
7. A method of manufacturing a hydrogel structure includes contacting a composition containing an isocyanate group with the surface of a hydrogel body of the hydrogel structure to form a film on the hydrogel body,
   wherein the hydrogel body contains water, a polymer, and a mineral.
8. The method according to 7 mentioned above, further includes contacting a polymer non-reactive to the body with the composition.
9. An internal organ model includes a hydrogel body containing water, a polymer, and a mineral and a film on the surface of the hydrogel body, wherein the film has a peeling-off strength of 1.0 N/mm or more.
10. The internal organ model includes a hydrogel body containing water, a polymer, and a mineral and a film on the surface of the hydrogel body, wherein the film has a structure of Si-CO-NH- on the side of the hydrogel body.
11. The internal organ model includes a hydrogel body containing water, a polymer, and a mineral and a film on the surface of the hydrogel body, wherein the film on the side of the hydrogel body is formed of a composition containing an isocyanate group.
12. The internal organ model according to any one of 9 to 11 mentioned above, wherein the film has different compositions on the side of the hydrogel body and on the opposite side to the side of the hydrogel body.
13. The internal organ model according to 12 mentioned above, wherein the film on the opposite side contains a polymer non-reactive to the hydrogel body.
14. The internal organ model according to any one of 9 to 13 mentioned above, wherein the film has a color different from the color of the hydrogel body.

Having now fully described embodiments of the present invention, it will be apparent to one of ordinary skill in the art that many changes and modifications can be made thereto without departing from the spirit and scope of embodiments of the invention as set forth herein.

## Claims

1. A hydrogel structure (200) comprising:
a hydrogel body (201) comprising water, a polymer, and a mineral; and
a film (202) on a surface of the hydrogel body (201),
wherein the film (202) has a peeling-off strength of 1.0 N/mm or more.

2. The hydrogel structure (200) according to claim 1, wherein the film (202;203) has different compositions on a side of the hydrogel body (201) and on an opposite side to the side of the hydrogel body (201).

3. The hydrogel structure (200) according to claim 2, wherein the film (203) on the opposite side comprises a polymer non-reactive to the hydrogel body (201).

4. The hydrogel structure (200) according to any one of claims 1 to 3, wherein the film (202) has a water vapor transmission rate of 400 g/(m²·day) or less.

5. A method of manufacturing a hydrogel structure (200) comprising:
contacting a composition containing an isocyanate group with a surface of a hydrogel body (201) of the hydrogel structure (200) to form a film (202) on the hydrogel body (201),
wherein the hydrogel body (201) comprises water, a polymer, and a mineral.

6. The method according to claim 5, further comprising contacting a polymer non-reactive to the hydrogel body (201) with the composition.

7. An internal organ model (30) comprising:
a hydrogel body (38) comprising water, a polymer, and a mineral, and
a film (36) on a surface of the hydrogel body (38),
wherein the film (36) has a structure of Si-O-CO-NH- on a side of the hydrogel body (38).

8. The internal organ model (30) according to claim 7, wherein the film (36) has a color different from a color of the hydrogel body (38).
